Europäisches Patentamt

European Patent Office

Office européen des brevets

(19)

(11) Publication number: **0 201 065**
**A2**

(12) **EUROPEAN PATENT APPLICATION**

(21) Application number: **86106072.1**

(22) Date of filing: **02.05.86**

(51) Int. Cl.⁴: **G 06 F 15/16**, G 06 F 9/46

(30) Priority: **06.05.85 US 730922**
**06.05.85 US 730923**
**06.05.85 US 730903**

(43) Date of publication of application: **12.11.86**
**Bulletin 86/46**

(84) Designated Contracting States: **DE FR GB**

(71) Applicant: **COMPUTER X, INC., 19115 W. Valley Highway Suite H104, Kent Washington 98032 (US)**

(72) Inventor: **Kun, Andrew Igor, 1108-2960 Don Mills Road, Willowdale Ontario M2J 3B8 (CA)**
Inventor: **Kolnick, Frank Charles, 33 Nymark Avenue, Willowdale Ontario M2J 2G8 (CA)**
Inventor: **Mansfield, Bruce Marr, 21823 124th Avenue S.E., Kent Washington 98031 (US)**

(74) Representative: **Hudson, Peter David et al, Motorola Patent and Licensing Operations - Europe Jays Close Viables Industrial Estate, Basingstoke Hampshire RG22 4PD (GB)**

(54) **Virtual single machine with logical ring and with message-like hardware interrupts and processor exceptions.**

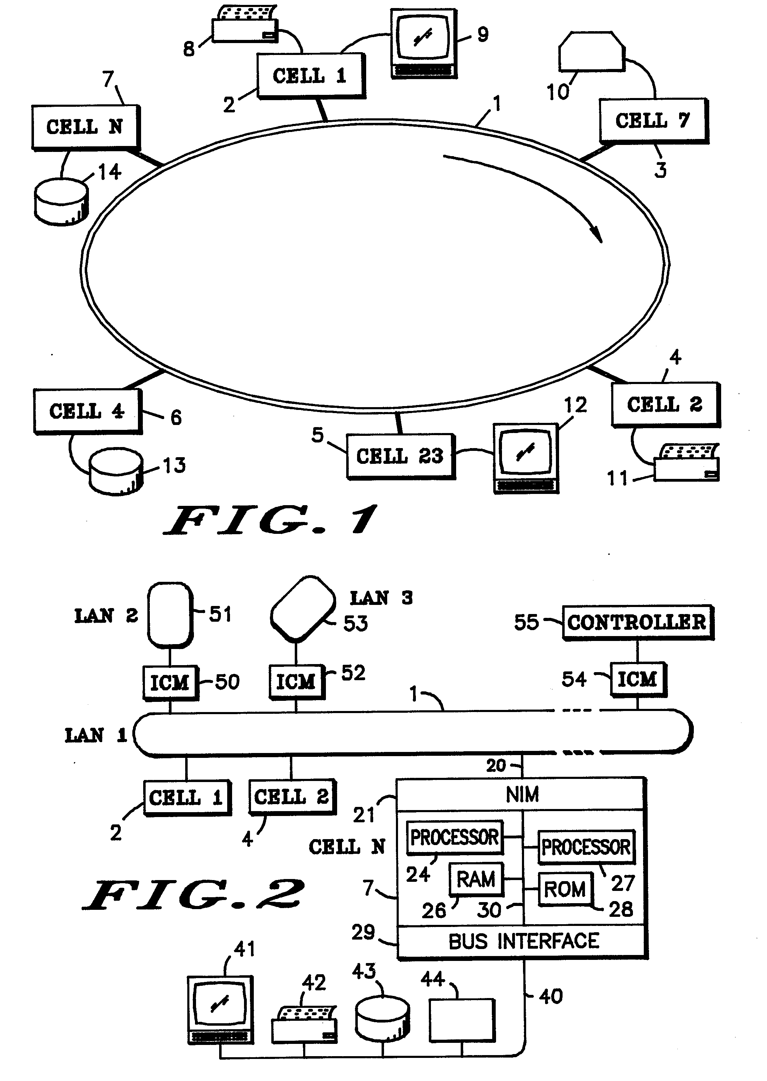

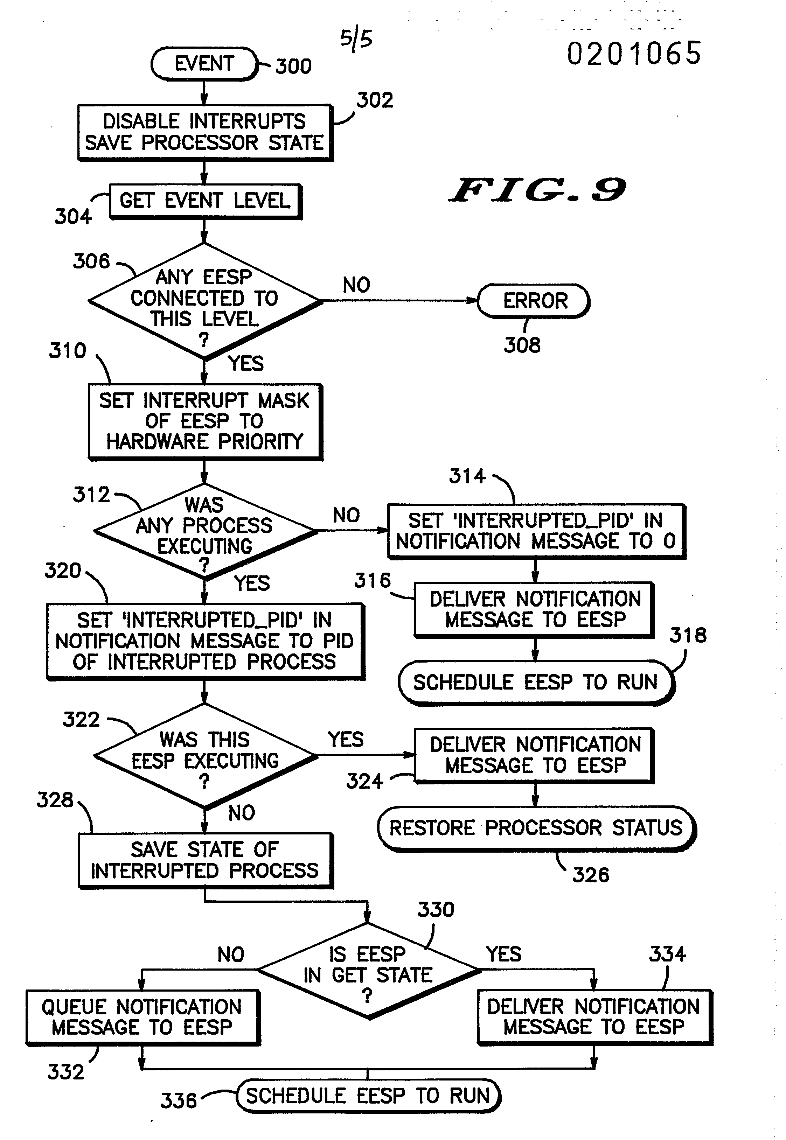

(57) A multi-processor, multi-tasking virtual machine (Fig. 2) comprises processes, messages, and contexts. Processes communicate only through messages. Processes may be grouped into contexts of related processes. Contexts may also be nested (Fig. 8). Communication may be made between processes in different or related contexts, or at the same context level, or between nested contexts.

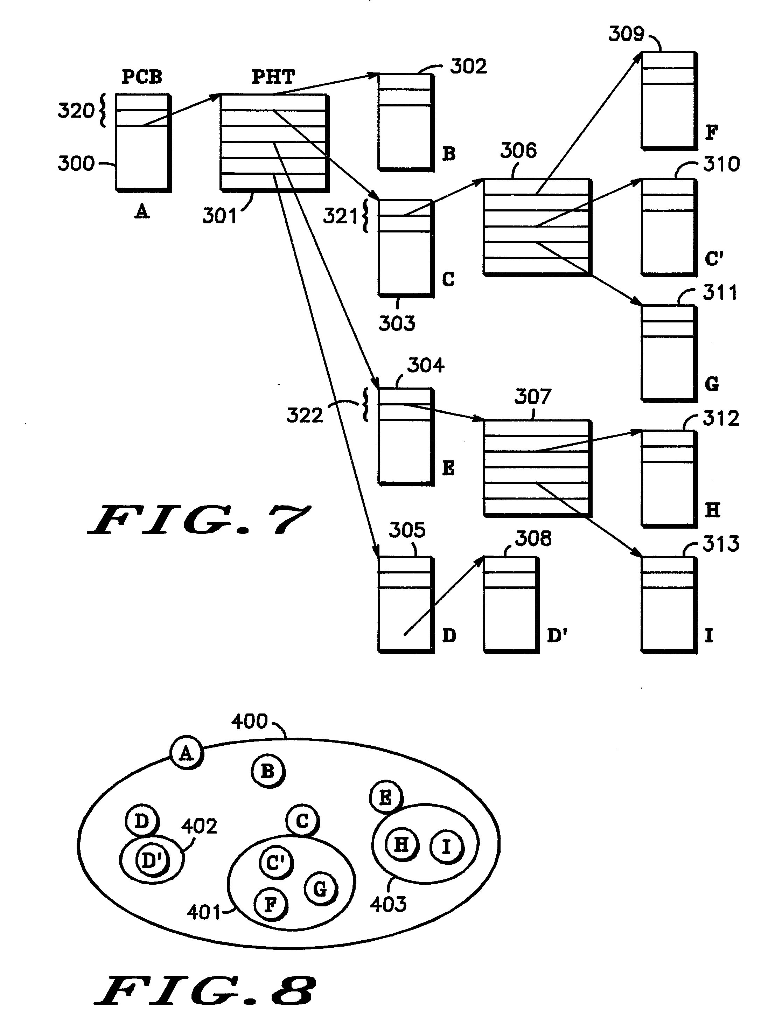

According to one message transmission mode (Fig. 7), a message may be sent to each process with a given name within one context, thus ensuring that all processes with the same name at the same context level can be communicated with individually without knowing how many there are or where they are located.

The virtual machine makes all hardware devices appear to be processes, in that the occurrence of an event on a device causes a message to be generated and sent to another process for handling (Fig. 5). The receiving process performs all operations required to handle the event. Thus a variety of hardware devices can be connected and disconnected from the system without interrupting its operation and without necessitating extensive software revisions.

ACTORUM AG

0201065
86106072.1

# VIRTUAL SINGLE MACHINE WITH LOGICAL RING AND
## WITH MESSAGE-LIKE HARDWARE INTERRUPTS AND PROCESSOR EXCEPTIONS

### TECHNICAL FIELD

This invention relates generally to digital data processing, and, in particular, to an operating system facilitating the transmission of messages among processes and which handles external hardware interrupts and processor exceptions as if they were messages received from respective processes.

### BACKGROUND OF THE INVENTION

The present invention is implemented in a distributed data processing system - that is, two or more data processing systems which are capable of functioning independently but which are so coupled as to send and receive messages to and from one another.

Local Area Network (LAN) is an example of a distributed data processing system. A typical LAN comprises a number of autonomous data processing "cells", each comprising at least a processor and memory. Each cell is capable of conducting data processing operations independently. In addition, each cell is coupled (by appropriate means such as a twisted wire pair, coaxial cable, fiber optic cable, etc.) to a network of other cells which may be, for example, a loop, star, tree, etc., depending upon the design considerations.

As mentioned above, the present invention finds utility in such a distributed data processing system, since there is a need in such a system for processes which are executing or which are to be executed in the individual cells to share data and to communicate data among themselves.

A "process", as used within the present invention, is defined as a self-contained package of data and executable procedures which operate on that data, comparable to a "task" in other known systems. Within the present invention a process can be thought of as comparable to a subroutine in terms of size, complexity, and the way it is used. The difference between processes and subroutines is that processes can be created and destroyed dynamically and can execute concurrently with their creator and other "subroutines".

Within a process, as used in the present invention, the data is totally private and cannot be accessed from the outside, i.e., by other processes. Processes can therefore be used to implement "objects", "modules", or other higher-level data abstractions. Each process executes sequentially. Concurrency is achieved through multiple processes, possibly executing on multiple processors.

Every process in the distributed data processing system of the present invention has a unique identifier (PID) by which it can be referenced. The PID is assigned by the system when the process is created, and it is used by the system to physically locate the process.

Every process also has a non-unique, symbolic "name", which is a variable-length string of characters. In general, the name of a process is known system-wide. To restrict the scope of names, the present invention utilizes the concept of a "context".

A "context" is simply a collection of related processes whose names are not known outside of the context. Contexts partition the name space into smaller, more manageable subsystems. They also "hide" names, ensuring that processes contained in them do not unintentionally conflict with those in other contexts.

A process in one context cannot explicitly communicate with, and does not know about, processes inside other contexts. All interaction across context boundaries must be through a "context process", thus providing a degree of security. The context process often acts as a switchboard for incoming messages, rerouting them to the appropriate sub-processes in its context.

A context process behaves like any other process and additionally has the property that any processes which it creates are known only to itself and to each other. Creation of the process constitutes definition of a new context with the same name as the process.

Any process can create context processes. Each new context thus defined is completely contained inside the context in which it was created and therefore is shielded from outside reference. This "nesting" allows the name space to be structured hierarchically to any desired depth.

Conceptually, the highest level in the hierarchy is the system itself, which encompasses all contexts. Nesting is used in top-down design to break a system into components or "layers", where each layer is more detailed than the preceding one. This is analogous to breaking a task down into subroutines, and in fact many applications which are single tasks on known systems may translate to multiple processes in nested contexts.

A "message" is a buffer containing data which tells a process what to do and/or supplies it with information it needs to carry out its operation. Each message buffer can have a different length (up to 64 kilobytes). By convention, the first field in the message buffer defines the type of message (e.g., "read", "print", "status", "event", etc.).

Messages are queued from one process to another by name or PID. Queuing avoids potential synchronization problems and is used instead of semaphores, monitors, etc. The sender of a message is free to continue after the message is sent. When the receiver attempts to get a message, it will be suspended until one arrives if none are already waiting in its queue. Optionally, the sender can specify that it wants to wait for a reply and is suspended until that specific message arrives. Messages from any other source are not dequeued until after that happens.

Within the present invention, messages are the only way for two processes to exchange data. There is no concept of a "global variable". Shared memory areas are not allowed, other than through processes which essentially "manage" each area by means of messages. Messages are also the only form of dynamic memory that the system handles. A request to allocate memory therefore returns a block of memory which can be used locally by the process but can also be transmitted to another process.

Messages provide the mechanism by which hardware transparency is achieved. A process located anywhere in the system may send a message to any other process anywhere else in the system (even on another processor) if it knows the process name. This means that processes can be dynamically distributed across the system at any time to gain optimal throughput without changing the processes which reference them. Resolution of destinations is done by searching the process name space.

The context nesting level determines the "scope of reference" when sending messages between processes by name. From a given process, a message may be sent to all processes at its own level (i.e., in the same context) and (optionally) to any arbitrary higher level. The contexts are searched from the current context upward until a match is found. All processes with the given name at that level are then sent a copy of the message. A process may also send a message to itself or to its parent (the context process) without knowing either name explicitly, permitting multiple instances of a process to exist in different contexts, with different names.

Sending messages by PID obviates the need for a name search and ignores context boundaries. This is the most efficient method of communicating.

There is a significant need to be able to provide within a data processing operating system the ability to easily pass messages among processes at the same level and having the same name. While it is known to provide the capability of sending messages between processes, it is presently not known to provide a "universal" message between a first process and all other related processes having the same name, without the first process knowing how many such other processes there are and where they are located.

There is also a significant need to be able to provide within a data processing operating system the ability to pass messages between processes contained within nested contexts, as such term is defined herein. While it is known to provide the capability of nesting subroutines within a given procedure, it is presently not known to provide message-passing between a first process and a second process which are related only through one or more contexts.

There is also a significant need to be able to provide within a data processing operating system the ability to easily handle a wide variety of external device interrupts, processor exceptions, etc. While it is known to provide the capability of servicing hardware interrupts in a data processing system, it is presently not known in such a system to regard all external devices as processes, and to regard the interrupts, exceptions, and traps which they generate as if they were messages originating from their respective processes.

*BRIEF SUMMARY OF INVENTION*

Accordingly, it is an object of the present invention to provide a data processing system having an improved operating system.

It is also an object of the present invention to provide an improved data processing system having an operating system which allows the easy transmission of messages within related groups of processes, or contexts.

It is another object of the present invention to provide an improved data processing system having an operating system which allows a first process to send a message to one or more other processes, wherein the other processes are related to the first process only through the fact that they share the same context and the same name.

It is yet another object of the present invention to provide an improved data processing system having an operating system which allows the nesting of unrelated groups of processes, or contexts.

It is a further object of the present invention to provide an improved data processing system having an operating system which allows a first process to send a message to a second process, wherein the second process is related to the first process only through one or more contexts.

It is also an object of the present invention to provide an improved data processing system having an operating system which easily handles hardware interrupts and exceptions originating from a variety of different hardware devices.

It is another object of the present invention to provide an improved data processing system having an operating system which regards hardware interrupts and exceptions as messages originating from processes.

These and other objects are achieved in accordance with a preferred embodiment of the invention by providing a method of communicating between processes in a data processing system comprising a plurality of processes, the method comprising the steps of grouping related processes into one or more contexts, each context having associated therewith a table identifying the location of each of its constituent processes; generating a request by a first process in one of the contexts to send a message to each process within the one context having the identical name, the location and quantity of such other processes within the context being unknown to the first process; searching the table associated with the one context to determine whether any other process is located within the one context having the name; and, if the one context contains one or more other processes having the same name, sending the message to each of the other processes at the locations indicated by the table for the other processes.

## BRIEF DESCRIPTION OF THE DRAWINGS

The invention is pointed out with particularity in the appended claims. However, other features of the invention will become more apparent and the invention will be best understood by referring to the following detailed description in conjunction with the accompanying drawings in which:

FIG. 1 shows a representational illustration of a single network, distributed data processing system incorporating the improved data management system of the present invention.

FIG. 2 shows a block diagram illustrating a multiple-network, distributed data processing system incorporating the improved data management system of the present invention.

FIG. 3 shows an architectural model of a data processing system incorporating the present invention.

FIG. 4 shows the relationship between software contexts and processes as they relate to the present invention.

FIG. 5 shows how messages may be sent between processes within nested contexts.

FIG. 6 illustrates the relationship between contexts and processes, in terms of process control blocks (PCB's) and process hash tables (PHT's).

FIG. 7 shows a different conceptual representation of the contexts and processes illustrated in FIG. 6.

FIG. 8 shows a flow diagram illustrating how an interrupt event is handled by the data processing system of the present invention.

## OVERVIEW OF COMPUTER SYSTEM

With reference to FIG. 1, a distributed computer configuration is shown comprising multiple cells 2-7 (nodes) loosely coupled by a local area network (LAN) 1. The number of cells which may be connected to the network is arbitrary and depends upon the user application. Each cell comprises at least a processor and memory, as will be discussed in greater detail with reference to FIG. 2 below. In addition, each cell may also include other units, such as a printer 8, operator display module (ODM) 9, mass memory module 13, and other I/O device 10.

With reference now to FIG. 2, a multiple-network distributed computer configuration is shown. A first local area network LAN 1 comprises several cells 2,4,and 7. LAN 1 is coupled to a second local area network LAN 2 by means of an Intelligent Communications Module (ICM) 50. The Intelligent Communications Module provides a link between the LAN and other networks and/or remote processors (such as programmable controllers).

LAN 2 may comprise several cells (not shown) and may operate under the same LAN protocol as that of the present invention, or it may operate under any of several commercially available protocols, such as Ethernet; MAP, the Manufacturing Automation Protocol of General Motors Corp.; Systems Network Architecture (SNA) of International Business Machines, Inc.; SECS-II; etc. Each ICM 50 is programmable for carrying out one of the above-mentioned specific protocols. In addition, the basic processing module of the cell itself can be used as an intelligent peripheral controller (IPC) for specialized devices.

LAN 1 is additionally coupled to a third local area network LAN 3 via ICM 52. A process controller 55 is also coupled to LAN 1 via ICM 54.

A representative cell N (7, FIG. 2) comprises a processor 24 which, in a preferred embodiment, is a Motorola 68010 processor. Each cell further includes a read only memory (ROM) 28 and a random access memory (RAM) 26. In addition, each cell includes a Network Interface Module (NIM) 21, which connects the cell to the LAN, and a Bus Interface 29, which couples the cell to additional devices within a cell. While a minimal cell is capable of supporting two peripheral devices, such as an Operator Display Module (ODM) 41 and an I/O Module 44, additional devices (including additional processors, such as processor 27) can be provided within a cell . Other additional devices may comprise, for example, a printer 42, and a mass-storage module 43 which supports a hard disk and a back-up device (floppy disk or streaming tape drive).

The Operator Display Module 41 provides a keyboard and screen to enable an operator to input information and receive visual information.

While a single cell may comprise all of the above units, in the typical user application individual cells will normally be dedicated to specialized functions. For example, one or more mass storage cells may be set up to function as data base servers. There may also be several operator consoles and at least one cell for generating hard-copy printed output. Either these same cells, or separate dedicated cells, may execute particular application programs.

The system is particularly designed to provide an integrated solution for factory automation, data acquisition, and other real-time applications. As such, it includes a full complement of services, such as a graphical output, windows, menus, icons, dynamic displays, electronic mail, event recording, and file management. Software development features include compilers, a window-oriented editor, a debugger, and performance-monitoring tools.

*Local Area Network*

The local area network, as depicted in either FIG.1 or FIG. 2, ties the entire system together and makes possible the distributed virtual machine model described below. The LAN provides high throughput, guaranteed response, reliability, and low entry cost. The LAN is also autonomous, in the sense that all system and applications software is unaware of its existence. For example, any Network Interface Module (e.g. NIM 21, FIG. 2) could be replaced without rewriting any software other than that which directly drives it.

The LAN interconnection medium may be twisted-pair or coaxial cable. Two channels (logically, two distinct networks) may be provided for reliability and for increased throughput.

The LAN architecture is a logical ring, in which an electronic "token" is constantly passed from cell to cell at high speed. The current holder of the token may use it to send a "frame" of data or may pass it on to the next cell in the ring. The NIM only needs to know the logical address and status of its immediately succeeding neighbor. The NIM's responsibility is limited to detecting the failure of that neighbor or the inclusion of a new neighbor. In general, adjustment to failed or newly added cells is automatic.

The network interface maps directly into the processor's memory. Data exchange occurs through a dual-ported buffer pool which contains a linked list of pending "frames". Logical messages, which vary in length, are broken into fixed-size frames for transmission and are reassembled by the receiving NIM. Frames are sequence-numbered for this purpose. If a frame is not acknowledged within a short period of time, it is retransmitted a number of times before being treated as a failure.

As described above with reference to FIG. 2, the LAN may be connected to other LAN's operating under the same LAN protocol via so-called "bridgeways", or it may be connected to other types of LAN's via "gateways".

*Software Model*

The computer operating system of the present invention operates upon processes, messages, and contexts, as such terms are defined herein. Thus this operating system offers the programmer a hardware abstraction, rather than a data or control abstraction.

Processes are referenced without regard to their physical location via a small set of message-passing primitives. As mentioned earlier, every process has both a unique system-generated identifier and a not necessarily unique name assigned by the programmer. The

0201065

identifier provides quick direct access, while the name has a limited scope and provides symbolic, indirect access.

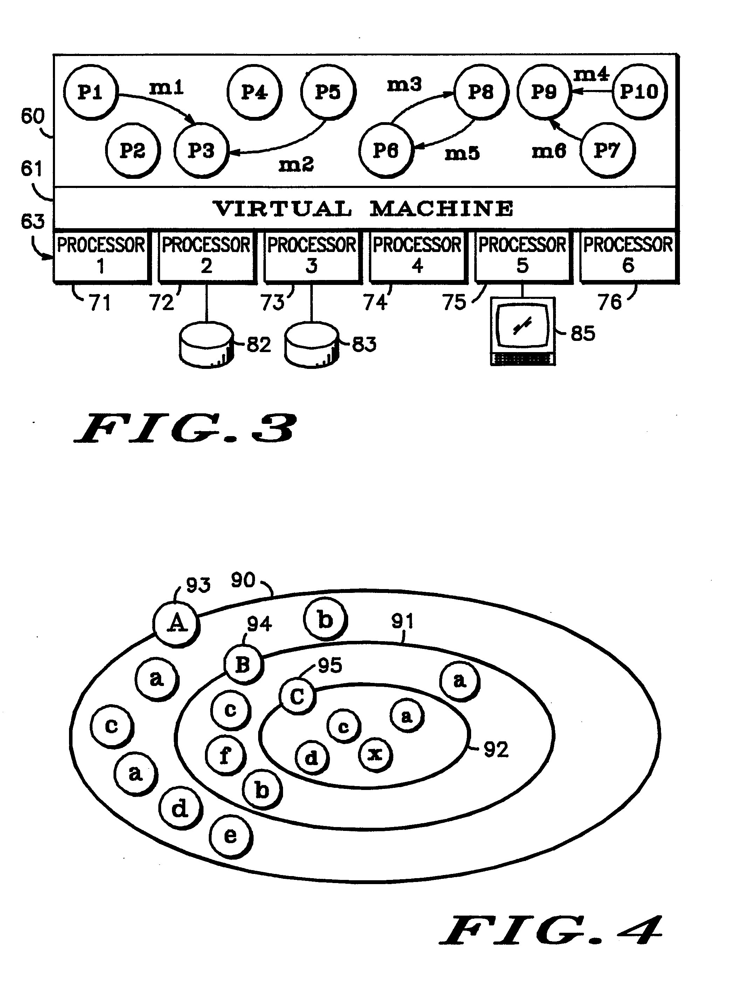

With reference to FIG. 3, an architectural model of the present invention is shown. The bottom, or hardware, layer 63 comprises a number of processors 71-76, as described above. The processors 71-76 may exist physically within one or more cells. The top, or software, layer 60 illustrates a number of processes P1-P10 which send messages m1-m6 to each other. The middle layer 61, labelled "virtual machine", isolates the hardware from the software, and it allows programs to be written as if they were going to be executed on a single processor. Conversely, programs can be distributed across multiple processors without having been explicitly designed for that purpose.

An important purpose of the virtual machine concept herein-disclosed is to provide the applications programmer with a simple, consistent model in which to design his system. This model, as mentioned above, is reduced to several elemental concepts: processes, messages, and contexts. As a consequence of this elemental model, hardware peculiarities are made transparent to the user, and changes in hardware configurations have no direct effect on the software.

### The Virtual Machine

As discussed earlier, a "process" is a self-contained package of data and executable procedures which operate on that data. The data is totally private and cannot be accessed by other processes. There is no concept of shared memory within the present invention. Execution of a process is strictly sequential. Multiple processes execute concurrently and must be scheduled by the operating system. The processes can be re-entrant, in which case only one copy of the code is loaded even if multiple instances are active.

Every process has a unique "process identifier number" (PID) by which it can be referenced. The PID is assigned by the system when the process is created and remains in effect until the process terminates. The PID assignment contains a randomizing factor which guarantees that the PID will not be re-used in the near future. The contents of the PID are irrelevant to the programmer but are used by the virtual machine to physically locate the process. A PID may be thought of as a "pointer" to a process.

Every process also has a "name" which is a variable-length string of characters assigned by the programmer. A name need not be unique, and this ambiguity may be used to add new services transparently and to aid in fault-tolerance.

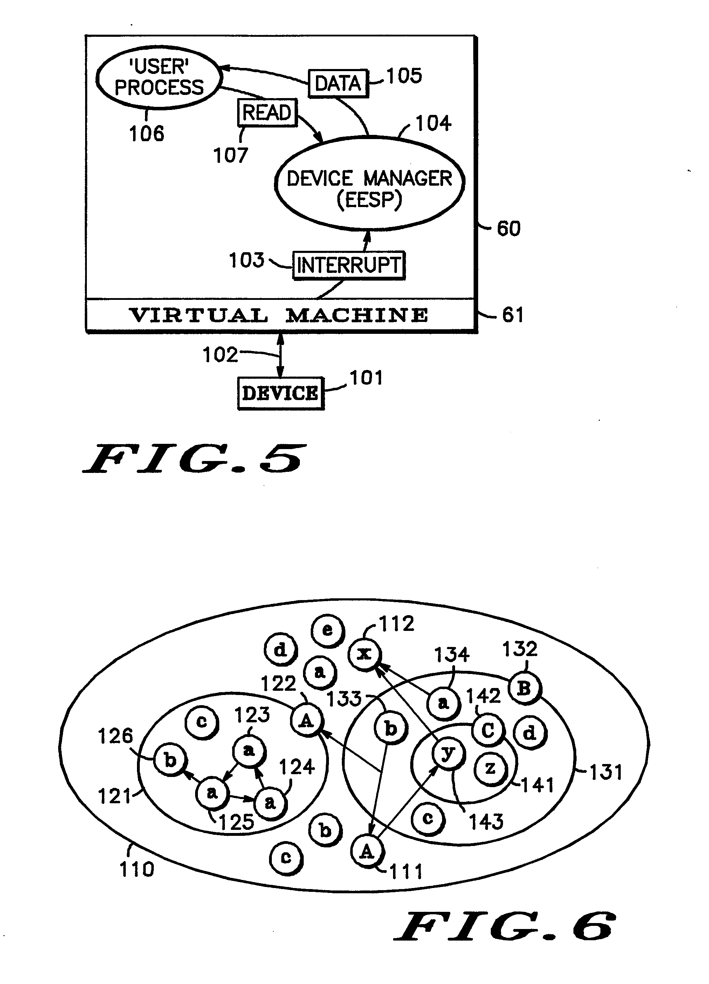

FIG. 4 illustrates that the system-wide name space is partitioned into distinct subsets by means of "contexts" identified by reference numerals 90-92. A context is simply a collection of related processes whose names are not known outside of the context. Context 90, for example, contains processes $\underline{A}$, $\underline{a}$, $\underline{a}$, $\underline{b}$, $\underline{c}$, $\underline{d}$, and $\underline{e}$. Context 91 contains processes $\underline{B}$, $\underline{a}$, $\underline{b}$, $\underline{c}$, and $\underline{f}$. And context 92 contains processes $\underline{C}$, $\underline{a}$, $\underline{c}$, $\underline{d}$, and $\underline{x}$.

One particular process in each context, called the "context process", is known both within the context and within the immediately enclosing one (referred to as its "parent context"). In the example illustrated in FIG. 4, processes $\underline{A}$-$\underline{C}$ are context processes for contexts 90-92, respectively. The parent context of context 91 is context 90, and the parent context of context 92 is context 91. Conceptually, the context process is located on the boundary of the context and acts as a gate into it.

Processes inside context 92 can reference any processes inside contexts 90 and 91 by name. However, processes in context 91 can only access processes in context 92 by going through the context process $\underline{C}$. Processes in context 90 can only access processes in context 92 by going through context processes $\underline{B}$ and $\underline{C}$.

The function of the context process is to filter incoming messages and either reject them or reroute them to other processes in its context. Contexts may be nested, allowing a hierarchy of abstractions to be constructed. A context must reside completely on one cell. The entire system is treated as an all-encompassing context which is always present and which is the highest level in the hierarchy. In essence, contexts define localized protection domains and greatly reduce the chances of unintentional naming conflicts.

If appropriate, a process inside one context can be "connected" to one inside another context by exchanging PID's, once contact has been established through one or the other of the context processes. Most process servers within the present invention function that way. Initial access is by name. Once the desired function (such as a window or file) is "opened", the user process and the service communicate directly via PID's.

A "message" is a variable-length buffer (limited only by the processor's physical memory size) which carries information between processes. A header, inaccessible to the programmer, contains the destination name and the sender's PID. By convention, the first field in a message is a null-terminated string which defines the type of message (e.g., "read", "status", etc.) Messages are queued to the receiving process when they are sent. Queuing ensures serial access and is used in preference to semaphores, monitors, etc.

As mentioned above, messages provide the mechanism by which hardware transparency is achieved. A process located anywhere in the virtual machine can send a message to any other process if it knows its name. Transparency applies with some restrictions across bridgeways (i.e., the interfaces between LAN's operating under identical network protocols) and, in general, not at all across gateways (i.e., the interfaces between LAN's operating under different network protocols) due to performance degradation. However, they could so operate, depending upon the required level of performance.

### Inter-Process Communication

All inter-process communication is via messages. Consequently, most of the virtual machine primitives are concerned with processing messages. The virtual machine kernel primitives are the following:

ALLOC   -   requests allocation of a (message) buffer of a given size.

FREE   -   requests deallocation of a given message buffer.

PUT   -   end a message to a given destination (by name or PID).

GET        -     wait for and dequeue the next incoming message, optionally from a specific process (by PID).

FORWARD    -     pass a received message through to another process.

CALL       -     send a message, then wait for and dequeue the reply.

REPLY      -     send a message to the originator of a given message.

ANY_MSG    -     returns "true" if the receive queue is not empty, else returns "false"; optionally, checks if any messages from a specific PID are queued.

CONNECT    -     indicates willingness to accept a particular class of external events.

DISCONNECT -     indicates stop accepting external events.

RELEASE    -     used by EESP's only to indicate completion of processing of a particular external event message.

To further describe the function of the kernel primitives, ALLOC handles all memory allocations. It returns a pointer to a buffer which can be used for local storage within the process or which can be sent to another process (via PUT, etc.). ALLOC never "fails", but rather waits until enough memory is freed to satisfy the request.

The PUT primitive queues a message to another process. The sending process resumes execution as soon as the message is queued.

FORWARD is used to quickly reroute a message but maintain information about the original sender (whereas PUT always makes the sending process the originator of the message).

REPLY sends a message to the originator of a previously received message, rather than by name or PID.

CALL essentially implements remote subroutine invocations, causing the caller to suspend until the receiver executes a REPLY.

Subsequently, the replied message is dequeued out of sequence, immediately upon arrival, and the caller resumes execution.

The emphasis is on concurrency, so that as many processes as possible are executed in parallel. Hence neither PUT nor FORWARD waits for the message to be delivered. Conversely, GETS suspends a process until a message arrives and dequeues it in one operation. The ANY_MSG primitive is provided so that a process may determine whether there is anything of interest in the queue before committing itself to a GET. The CONNECT, DISCONNECT, and RELEASE primitives are specifically used to handle external interrupts.

When a message is sent by name, the destination process must be found in the name space. The search path is determined by the nesting of the contexts in which the sending process resides. From a given process, a message can be sent to all processes in its own context or (optionally) to those in any higher context. Refer to FIG. 5. The contexts are searched from the current one upward until a match is found or until the system context is reached. All processes with the same name in that context are then queued a copy of the message.

For example, with reference to FIG. 5, assume that in context 141 process $y$ sends a message to ALL processes by the name $x$. Process $y$ first searches within its own context 141 but finds no process $x$. The process $y$ searches within the next higher context 131 (its parent context) but again finds no process $x$. Then process $y$ searches within the next higher context 110 and finds a process $x$, identified by reference numeral 112. Since it is the only process $x$ in context 110, it is the only recipient of the message from process $y$.

If process $a$ in context 131 sends a message to ALL processes by the name $x$, it first searches within its own context 131 and, finding no processes $x$ there, it then searches within context 110 and finds process $x$.

Assume that process $b$ in context 131 sends a message to ALL processes by the name $A$. It would find process $A$ (111) in context 110, as well as process $A$ (122) which is the context process for context 121.

A process may also send a message to itself or to its context process without knowing either name explicitly.

The concept of a "logical ring" (analogous to a LAN) allows a message to be sent to the NEXT process in the system with a given name. The message goes to exactly one process in the sender's context, if such a process exists. Otherwise the parent context is searched.

The virtual machine guarantees that each NEXT transmission will reach a different process and that eventually a transmission will be sent to the logically "first" process (the one that sent the original message) in the ring, completing the loop. In other words, all processes with the same name at the same level can communicate with each other without knowing how many there are or where they are located. The logical ring is essential for distributing services such as a data base. The ordering of processes in the ring is not predictable.

For example, regarding FIG. 5, if process a (125) in context 121 sends a message to process a using the NEXT primitive, the search finds a first process a (124) in the same context 121. Process a (124) is marked as having received the message, and then process a (124) sends the message on to the NEXT process a (123) in context 121. Process a (123) is marked as having received the message, and then it sends the message on to the NEXT process a, which is the original sender process a (125), which knows not to send it further on, since it's been marked as having already received the message.

Sending messages directly by PID obviates the need for a name search and ignores context boundaries. This is known as the DIRECT mode of transmission and is the most efficient. For example, process A (111) sends a message in the DIRECT mode to process y in context 141.

A process may also send a message to itself or to its context process without knowing either name explicitly.

The concept of a "logical ring" (analogous to a LAN) allows a message to be sent to the NEXT process in the system with a given name. The message goes to exactly one process in the sender's context, if such a process exists. Otherwise the parent context is searched.

The virtual machine guarantees that each NEXT transmission will reach a different process and that eventually a transmission will be sent to the logically "first" process (the one that sent the original message) in the ring, completing the loop. In other words, all processes with the same name at the same level can communicate with each other without knowing how many there are or where they are located. The logical ring is essential for distributing services such as a data base. The ordering of processes in the ring is not predictable.

For example, regarding FIG. 5, if process a (125) in context 121 sends a message to process a using the NEXT primitive, the search finds a first process a (124) in the same context 121. Process a (124) is marked as having received the message, and then process a (124) sends the message on to the NEXT process a (123) in context 121. Process a (123) is marked as having received the message, and then it sends the message on to the NEXT process a, which is the original sender process a (125), which knows not to send it further on, since it's been marked as having already received the message.

Sending messages directly by PID obviates the need for a name search and ignores context boundaries. This is known as the DIRECT mode of transmission and is the most efficient. For example, process A (111) sends a message in the DIRECT mode to process y in context 141.

If a process sends a message in the LOCAL transmission mode, it sends it only to a process having the given name in the sender's own context.

In summary, including the DIRECT transmission mode, there are five transmission modes which can be used with the PUT, FORWARD, and CALL primitives:

ALL      -    to all processes with the given name in the first
              context which contains that name, starting with the
              sender's context and searching upwards through all
              parent contexts.

LOCAL    -    to all processes with the given name in the sender's
              context only.

NEXT     -    to the next process with the given name in the same
              context as the sender, if any; otherwise it searches upwards through all parent contexts until the name is found.

LEVEL   -   sends to "self" (the sending process) or to "context" (the context process corresponding to the sender's context); "self" cannot be used with CALL primitive.

DIRECT   -   sent by PID.

Messages are usually transmitted by queueing a pointer to the buffer containing the message. A message is only copied when there are multiple destinations or when the destination is on another cell.

### External Interrupts as Messages

Now with specific reference to FIG. 5, several features relating to the present invention will be discussed. FIG. 5 illustrates the relationship of external events to processes. As mentioned above, the virtual machine makes devices look like processes.

In FIG. 5, the exterior box 60 represents a portion of the entire data processing system, containing the virtual machine 61 and two typical processes 104 and 106. The arrows represent queued message transmissions, and they are overlaid with boxes 103, 105, and 107 representing typical messages.

For example, assume a user's process 106 issues a READ request for a particular device via its "external event service process" (EESP), functioning as the device manager (i.e., EESP 104). The external device generates a series of events which are noticed by the virtual machine which consequently queues "event" messages to the EESP 104. Eventually, an "end of line" event is generated. (These messages are queued along with other messages, from user processes, to the EESP 104.) As a result, a message containing a data record 105 is queued to the user's process 106.

Thus, the EESP performs all hardware-specific functions related to the event, such as setting control registers, moving data 105 to a

- 18 -

user process 106, transmitting "Read" messages from the user process 106, etc., and then "releasing" the interrupt.

When an interrupt occurs in an external device 101, the virtual machine kernel 61 also queues an interrupt message 103 to EESP 104. For efficiency, the message is pre-allocated once and circulates between the EESP 104 and the kernel. The message contains just enough information to indicate the occurrence of the event.

To become an EESP, a process issues a "connect" primitive specifying the appropriate device register(s). It must execute a "disconnect" before it exits. Device-independence is achieved by making the message protocol between EESP's and applications processes the same wherever possible. In this manner a wide variety of different types of hardware devices can be accommodated without having to make extensive software revisions.

*Operating System*

The operating system of the present invention consists of a kernel, which implements the primitives described above, plus a set of processes which provide process creation and termination, time management (set time, set alarm, etc.) and which perform cell start-up and configuration. Drivers for devices are also implemented as processes (EESP's), as described above. This allows both system services and device drivers to be added or replaced easily. The operating system also supports swapping and paging, although both are invisible to applications software.

Unlike known distributed computer systems, that of the present invention does not use a distinct "name server" process to resolve names. Name searching is confined to the kernel, which has the advantage of being much faster.

A minimal bootstrap program resides permanently (in ROM) on every cell, e.g. ROM 28 in cell N of FIG. 2. The bootstrap program executes automatically when a cell is powered up and begins by performing basic on-board diagnostics. It then attempts to find and start an initial system code module which comprises the entire kernel, and EESP's for the clock, disk (if required), and NIM (if required). The module is sought on the first disk drive on the cell, if any. If there isn't a disk, and the cell is on the LAN, a message will be sent out requesting the module. Failing that, the required software must be resident in ROM. System services for the clock and for process creation, an initialization program, and a minimal file system, are also built into the module. The initialization program sets up all of the kernel's internal tables and then calls predefined entry points in each of the preloaded services (file management, etc.). The net result is that EESP's for the attached devices are scheduled to run, and the cell is available.

In general, there exists a template file describing the initial software and hardware for each cell in the system. The template defines a set of initial processes (usually one per service) which are scheduled immediately after the cell start-up. These processes then start up their respective subsystems. A cell configuration service on each cell sends configuration messages to each subsystem when it is being initialized, informing it of the devices it owns. Thereafter, similar messages are sent whenever a new device is added to the cell or a device fails or is removed from the cell.

Thus there is no well-defined meaning for "system up" or "system down" - as long as any cell is active, the system as a whole may be considered to be "up". Cells can be shut down or started up dynamically without affecting other cells on the network. The same principle applies, in a limited sense, to peripherals. Devices which can identify themselves with regard to type, model number, etc. can be added or removed without operator intervention. The operating system cannot maintain a global status of the system, nor does it attempt to centralize control of the entire system.

## *DETAILED DESCRIPTION OF THE INVENTION*

FIG. 6 shows a conceptual representation illustrating the relationship between contexts and processes, in terms of context processes, process control blocks (PCB's), and process hash tables (PHT's). FIG. 6 also illustrates the concept of nested contexts. For example, process **A** is a context process for the context comprising processes **A-E**. Process **C** is a context process for the context comprising processes **C'**, **F**, and **G**. Process **E** is a context process for the context comprising processes **H** and **I**. And process **D** is a context process for the context comprising processes **D** and **D'**.

FIG. 7 shows a slightly different conceptual representation of the identical nested contexts illustrated in FIG. 6. As seen in FIG. 7, the context 401 comprising processes **C**, **C'**, **F**, and **G** is contained within the context 400 comprising processes **A-E**. Also the context 403 comprising processes **E**, **H**, and **I** is contained within context 400. Likewise, the context 402 comprising processes **D** and **D'** is contained within context 400.

Referring again to FIG. 6, process **A** comprises a portion 300 of memory space, which includes a process control block (PCB) 320, which contains the starting memory address of process **A**'s process hash table (PHT) 301. PHT 301 is a table containing the starting memory addresses of each of the processes **B-E** contained within context 400 (FIG. 7), i.e., the context for which process **A** is the context process. Thus one location of PHT 301 points to the starting memory address 302 of process **B**. Another location of PHT 301 points to the start of process **C**.

Process **C**, being a context process for context 401 (FIG. 7), also contains a PCB 321, which points to the start of process **C**'s PHT 306. PHT 306 contains the starting addresses of processes **C'**, **F**, and **G**.

Another location of PHT 301 points to the start of process **E**. Process **E** is a context process for context 403 (FIG. 7), so its PCB 322 contains the start of process **E**'s PHT 307. PHT 307 contains the starting addresses of processes **H** and **I**.

Another location of PHT 301 points to the start of process **D**. Process **D** includes the starting address 308 of process **D'**.

FIG. 8 shows a flow diagram illustrating how an interrupt event is handled by the data processing system of the present invention and will be discussed shortly.

Interrupt events may be either generated outside the virtual machine (e.g., by an operator keystroke) or inside the virtual machine (e.g., by a software trap or processor exception).

The virtual machine makes devices look like processes, in that the occurrence of an event on a device causes a message to be generated and sent to another process. The message contains just enough information to inform the receiving process of the event. The receiving process is expected to perform all hardware-specific operations related to the event, such as setting control registers, extracting data from buffers, etc. In other words, it performs the functions of a typical device "driver" or "handler".

Such processes, as mentioned above, are called External Event Service Processes or EESP's, from the virtual machine's point of view. To become an EESP, a process issues a CONNECT primitive to connect itself to the device; it must issue a DISCONNECT primitive before it exits. The event message is pre-allocated by the EESP during its initialization and is freed only after a DISCONNECT. The message circulates between the virtual machine and the EESP.

To the user, an EESP is usually accessed as a "device manager", which not only handles external events but also accepts requests to control and communicate with the device. If the device is quite complex, the manager will be a context, and the EESP will be a process in that context. The device manager filters external events and presents a uniform, device-independent interface to applications software.

## OPERATION OF PREFERRED EMBODIMENT

With reference still to FIG. 6, the manner in which messages are communicated between processes of identical name contained within the same context will now be described with regard to the transmission mode NEXT (refer to the section above entitled "Interprocess Communication" for a further discussion of this transmission mode).

Regarding transmission mode NEXT, the usual procedure (i.e., when the sending process and receiving processes have different names) is to first search for the destination process by name within the sender's context. If the destination process isn't found there, then the search continues in the next higher context (i.e., the parent context), then in the parent's parent context, etc. The first process with the specified name in the first context level where at least one match is found will receive the message.

Where transmission mode NEXT is used to communicate between processes having the same name, a slightly different procedure governs. If the sending process is the only process with the specified name within its context, then it will also be the receiver of the message.

If there are several processes with the specified name in the sender's context, then the next one listed in the PHT of the context process will receive the message first. This process then retransmits the message, again using the transmission mode NEXT, and the message goes to the next process, if any, listed in the PHT of the context process. This procedure continues until all processes with the same name within the same context have received the message, and the message has wrapped around and been received by the sending process.

To illustrate, assume, for example, that process $\underline{C}'$ wants to send a message to process(es) $\underline{C}$. The process hash table (PHT) 306 of the context process $\underline{C}$ is searched, locating the starting address 310 of process $\underline{C}'$, and the message is sent back to process $\underline{C}'$. There are no other processes named $\underline{C}$ in context 401 (FIG. 12), so the message has wrapped around and is received by the sending process $\underline{C}'$.

Assume now that process $\underline{C}$ is sending a message to process(es) $\underline{C}$. The PHT 301 of the context process $\underline{A}$ is searched, locating the starting address of process $\underline{C}$, and the message is sent to process $\underline{C}$. Again, since $\underline{C}$ is the only process within context 400, the message wraps around to $\underline{C}$.

Assume that process $\underline{D}$ wants to send a message to process(es) $\underline{D}$. First the PHT 301 of the context process $\underline{A}$ is searched, locating the starting address 308 of process $\underline{D}'$, which is within the same context as process $\underline{D}$, so the message is delivered to process $\underline{D}'$.

Lastly, suppose that process $\underline{D}'$ wishes to send a message to process(es) $\underline{D}$. The PHT 301 of the context process $\underline{A}$ is searched, locating the starting address 305 of process $\underline{D}$, so the message is delivered to process $\underline{D}$.

With reference still to FIG. 6, the manner in which messages are communicated between processes within nested contexts of the present invention will now be described with regard to the transmission modes LOCAL, ALL, and NEXT (refer to the section above entitled "Interprocess Communication" for a further discussion of these transmission modes).

Regarding first a message transmission in the LOCAL transmission mode, assume that process **F** sends a message to process(es) **G**. The PHT 306 of the context process **C** is searched, and the starting address 311 of process **G** is found. The message is then delivered to process **G**.

Suppose that context process **C** wishes to send a message to process(es) **C'**. Process **C**'s PHT 306 is again searched, and the starting address 310 of process **C'** is found, and the message is then delivered to process **C'**.

Now assume that process **B** wants to send a message to process(es) **D**. The PHT 301 of the context process **A** is searched, and the starting address 305 of process **D** is found. The message is delivered to process **D**.

Assume that process **H** wants to send a message to process(es) **G**. The PHT 307 of the context process **E** is searched, and no destination is found, so no message is sent to process **G**. Since this was in transmission mode LOCAL, no attempt was made to search for process **G** by searching via context processes higher up in the context hierarchy.

Now consider a message transmission in the ALL transmission mode. Assume that process **F** wishes to send a message to process(es) **G**. The PHT 306 of the context process **C** is searched, and the message is delivered to process **G**.

Assume that process **H** wants to send a message to process(es) **C**. The PHT 307 of the context process **E** is searched, and no destination is found. Then the PHT 301 of the next higher context process **A** is searched, and the starting address of process **C** is found, so the message can be delivered to process **C**.

Suppose that process **F** sends a message to process(es) **D**. The PHT 306 of the context process **C** is searched, and no destination is found. Then the PHT 301 of the next higher context process **A** is searched, and the starting address of **D** is found. The message is sent to process **D**, and since process **D** contains the starting address of process **D'**, a message is also sent to process **D'**.

Finally, consider a message transmission in the NEXT transmission mode. Assume that process **F** is sending a message to process(es) **G**.

The PHT 306 of the context process C is searched, locating the starting address 311 of process G, and the message is sent to process G.

Assume that process H wants to send a message to process C. First the PHT 307 of the context process E is searched, and no destination is found. Then the PHT 301 of the next higher context process A is searched, and the starting address of process C is found, so the message is delivered to process C.

Lastly, suppose that process F wishes to send a message to process(es) D. First the PHT 306 of the context process C is searched, and since no destination is found, the PHT 301 of the next higher context process A is searched. There the starting address of process D is found, and the message is delivered to D only (not to D').

With reference now to FIG. 8, the manner in which messages originating from hardware interrupts and exceptions are handled by the processor will be described.

Upon the occurrence of an Event 300, Interrupts are disabled and the processor state is saved (box 302). Next, in box 304 the event level is obtained using the GET primitive.

In decision box 306, if any EESP is already connected to this level, an error message is generated in box 308. If no EESP is already connected to this level, the procedure continues to box 310, where the interrupt mask of the EESP is set to hardware priority.

In decision box 312, if no process was executing, then the "interrupted_PID" field in the notification message is set to zero (box 314), the notification message is delivered to the EESP (box 316), and the EESP is scheduled to run (box 318). If a process was executing (decision box 312), the set the "interrupted_PID" field in the notification message to the PID of the interrupted process (box 320).

In decision box 322, if this EESP was executing, then deliver the notification message to the EESP (box 324), and restore the processor status (box 326). If this EESP was not executing, then save the state of the interrupted process (box 328).

In decision box 330, if this EESP is in the GET state, then deliver the notification message to the EESP (box 334), and schedule the EESP to run (box 336). Otherwise, queue the notification message to the EESP (box 332), and schedule the EESP to run (box 336).

*DESCRIPTION OF PROGRAM LISTINGS*

Program Listings A-F contain a "C" language implementation of the concepts relating to message transmission among processes, including nested contexts, as described hereinabove.

The data structures PCB (process control block) and PHT (process hash table) are declared in Program Listing F, lines 30-31 and defined in Program Listing C, lines 50-101. In Program Listing C, line 52 represents the pointer of a context process to its process hash table, and line 53 is a link between processes in the same context that have the same hash index (hash collisions).

In Program Listing A, lines 38-45 describe the creation of a process-context hierarchy, as shown in FIG. 11. Processes are created one at a time, their user-assigned name is hashed, and the resulting index is used to insert the process into the process hash table of its parent. Hash collisions within a context are linked in the order of their creation. Lines 66-73 describe the removal of a process from the process-context hierarchy, when that process terminates its execution.

In Program Listing B, lines 274-288 describe the "C" language implementation of the LOCAL transmission mode. The search starts in the PHT of the parent process (if the sender is a process) or in the sender's own PHT (if it is a context process). A copy of the message is delivered to each of the processes with the specified name in this context. The sender process is excluded from the search.

In Program Listing B, lines 374-391 describe the "C" language implementation of the ALL transmission mode. The search starts in the PHT of the parent process (if the sender is a process) or in the sender's own PHT (if it is a context process). A copy of the message is delivered to each of the processes with the specified name in the first parent context where at least one destination is found. The sender process is excluded from the search.

In Program Listing B, lines 473-503 describe the "C" language implementation of the NEXT transmission mode. The search starts in the PHT of the parent process, and the message is delivered to the first process with the specified name in the first parent context where at least one destination is found. The search includes the sender process.

In Program Listing B, lines 476-491, in particular, describe the implementation of the logical ring, according to which a message is sent to each process with the same name in the same context. The "logical ring" procedure is used in transmission mode NEXT only, whenever the name of the destination process is the same as the name of the sender process. In this case the search starts with the next process with the same hash index in the sender's context, and it "wraps around" at the end of the linked list (i.e. continues with the first entry with the same hash index in the same PHT). If there is only one process (i.e., the sender process) with the given name in that context, then the sender process will receive the message.

In Program Listing B, lines 636-641 describe the "C" language implementation of the LEVEL transmission mode. The parent of a process is found using the pointer in the PCB (line 51 in Program Listing C).

In Program Listing C, lines 113-116, the data structure CT (Connection Table) is defined. Data structure CT is declared in Program Listing F, line 37. This table has an entry for every external event recognized by the system (including hardware interrupts, processor exceptions, software traps, etc.). Each entry contains a pointer to the PCB (Process Control Block) of the EESP (External Event Service Process) that issued a CONNECT kernel primitive for that event level, and a pointer to the external event occurrence notification message.

In Program Listing D, lines 29-49 describe the implementation of the CONNECT kernel primitive, whereby a process declares its readiness to accept external event occurrence notification messages, i.e., to become an EESP. It is here that the appropriate entry in the Connection Table is initialized with the PCB pointer and the notification message pointer.

In Program Listing D, lines 52-60 describe the implementation of the DISCONNECT kernel primitive, whereby a process ceases to receive notification messages for that event level. The appropriate entry in the Connection Table is cleared.

In Program Listing D, lines 62-68 describe the implementation of the RELEASE kernel primitive. This is used by an EESP to notify the kernel that the processing of the current external event is complete, and the process is ready to receive another event notification.

In Program Listing E, lines 471-552 describe the actual context switching and external event notification mechanism. This code, presented here in Motorola MC68010 assembly language, represents the implementaion for the Motorola MC68010 microprocessor.

It will be apparent to those skilled in the art that the herein disclosed invention may be modified in numerous ways and may assume many embodiments other than the preferred form specifically set out and described above. Accordingly, it is intended by the appended claims to cover all modifications of the invention which fall within the true spirit and scope of the invention.

What is claimed is:

PROGRAM LISTING A

```
        MODULE NAME  :  %M%
        SUBSYSTEM NAME  :  kernel
        DATE & TIME OF CREATION  :      %E%      %U%
        DATE & TIME OF COMPILATION  :  %D%      %T%
        VERSION  :      %R%.%L%
        PROGRAMMER  :  Andrew Kun
        DESCRIPTION  : Process management module (p_create & exit)
        PARAMETERS PASSED  :
        PARAMETERS RETURNED  :
*/

#include "local/cx.h"
#include "local/os/vers.h"
#include "local/os/kerntypes.h"




void cx_p_create (pcb)
register PCB *pcb;
{
  extern short hash();
  extern void insert_fifo();
  extern void tonim_cxc();

  register PCB *p;
  long i;

  i = hash(pcb->p_name);
  if ((p = *(pcb->parent->pht+i)) !=NULL) {
    while (p->next_hash != NULL)
      p = p->next_hash;
    p->next_hash = pcb;
  }
  else
    *(pcb->parent->pht+i) = pcb;
  if (!pcb->parent->parent)
    tonim_cxc(pcb->p_name,TRUE);
  if (pcb->k_code != (char)SUSPENDED)
    insert_fifo(pcb);
}



void cx_exit (pcb)
register PCB *pcb;
{
```

```
extern short hash();
extern void tonim_cxc();
extern void extract_rtrq();

register PCB *p;
register long i;

if (pcb->k_code == (char)NOCODE)                /* still running        */
  extract_rtrq(pcb);
if (!pcb->parent->parent)
  tonim_cxc(pcb->p_name,FALSE);
i = hash(pcb->p_name);
if ((p = *(pcb->parent->pht+i)) == pcb)
  *(pcb->parent->pht+i) = pcb->next_hash;
else {
  while (p->next_hash != pcb)
    p = p->next_hash;
  p->next_hash = .pcb->next_hash;
}
  pcb->pid = 0L;
}



void pht_init()
{
  extern long root[];
  extern PCB. *pht[];
  register short i;

  root[0] = 0;                                  /* root's parent */
  root[1] = (long) pht;                         /* root pht */
  for (i=0; i<PHTSIZE; i++)
    pht[i] = NULL;
}



void extract_rtrq(pcb)
register PCB *pcb;
{
  extern PCB *rdynxt[], *rdylst[];
  register PCB *p;

  if ((p = rdynxt[pcb->c_pri]) == pcb) {
    if (!(rdynxt[pcb->c_pri] = pcb->link))
      rdylst[pcb->c_pri] = NULL;
  }
  else {
    while (p&&(p->link!=pcb))
      p = p->link;
    if (!p)
      if (!(p->link = pcb->link))
        rdylst[pcb->c_pri] = p;
  }
}
```

```
#       MODULE NAME   :  %M%
#       SUBSYSTEM NAME  :  kernel
#       DATE & TIME OF CREATION   :    %E%    %U%
#       DATE & TIME OF COMPILATION  :  %D%   %T%
#       VERSION  :    %R%.%L%
#       PROGRAMMER  :  Andrew Kun
#       DESCRIPTION  : This file contains the implementation of the five
#                      inter-process communication support
#                      function: 'putfor'
#
#       PARAMETERS PASSED  : As per Kernel Interface Guide rev.6
#       PARAMETERS RETURNED  : As per Kernel Interface Guide rev.6
# */
#
# #include "local/cx.h"
# #include "local/os/vers.h"
# #include "local/os/kerntypes.h"
#
# extern PCB *running;
# extern short hash();
# extern void tonim_xmit();
# extern PCB *makepcb();
# extern int strcmp();
# extern void queue_msg();
# extern void msg_err();
# extern MSG *my_allocmem();
# extern bool cx_freemem();
# extern char *memcpy();
# extern void insert_fifo();
# extern bool munlink();
#
# extern long root[];
# extern long starting;
# extern long this_cell;
#
        set     MAXPRI,63
# MSG offsets
        set     MNXT,0
        set     MPRV,4
        set     MFLG,8
        set     MMOD,9
        set     MPID,10
        set     MOWN,14                 # owner PCB.
        set     MSIZ,18
        set     MPRI,22
        set     MMID,23
# EESP msg offsets
```

```
        set     EMSG,24
        set     ELEV,32
        set     EPID,36
# PCB offsets
        set     LNK,12          # link pointer
        set     PID,44          # PCB pid.
        set     PRI,48          # priority
        set     KCD,49          # primitive code
        set     FLG,51          # PCB flags
        set     SP%,56          # current stack pointer
        set     D0%,60          # register %d0
        set     D1%,64          # register %d1
        set     D2%,68          # register %d2
        set     D3%,72          # register %d3
        set     D4%,76          # register %d4
        set     D5%,80          # register %d5
        set     D6%,84          # register %d6
        set     D7%,88          # register %d7
        set     A0%,92          # register %a0
        set     A1%,96          # register %a1
        set     A2%,100         # register %a2
        set     A3%,104         # register %a3
        set     A4%,108         # register %a4
        set     A5%,112         # register %a5
        set     A6%,116         # register %a6
        set     PC%,120         # register %pc
        set     SR%,124         # register %sr
        set     EXC,144         # execution time
        set     ACT,148         # last activation
# Error levels
        set     x_primitive,257     # bad kernel primitive
        set     x_xmitmode,258      # bad transmission mode
        set     x_pointer,259       # pointer to an odd address
        set     x_level,260         # bad interrupt level
        set     x_interrupt,261     # fatal interrupt
        set     x_fakemsg,262       # message isn't a real message
        set     x_stolenmsg,263     # message isn't owned by requester
        set     x_freedmsg,264      # message has been freed
        set     x_allocedmsg,265    # message was alloced, not gotten
        set     x_smallmsg,266      # message is too small for connect

        text
        global  putfor
        set     S%1,-16
        set     T%1,-30
        set     F%1,-34
        set     M%1,0x3c00
putfor:
# bool putfor (mode, dest, msg)
# long mode;
# DESTINATION dest;
# register MSG *msg;
# {
#     extern short hash();
#     extern void tonim_xmit();
#     extern PCB *makepcb();
```

0201065

```
#       extern int strcmp();
#       extern void queue_msg();
#       extern void msg_err();
#       extern MSG *my_allocmem();
#       extern bool cx_freemem();
#       extern char *memcpy();
#       extern void insert_fifo();
#       extern bool munlink();
#
#       extern long root[];
#       extern long starting;
#       extern long this_cell;
#       register PCB *p, *q;
#       register MSG *m;
#       register PCB *r = running;
#       short i;
#       int found;
#       int fromnim;
#
        set     RUNNING,-4+S%1
        set     I%,-6+S%1
        set     FOUND%,-10+S%1
        set     FROMNIM%,-14+S%1
        set     ACCEPTED%,FOUND%+1

        link    %fp,&-34
        movm.l  &0x3c00,S%1(%fp)
        tst.l   8(%fp)
        blt.b   L%badmode
        cmp.l   8(%fp),&4
        ble.b   L%41                    # if (!starting && (msg->owner !=r))
L%badmode:
        mov.l   &x_xmitmode,-(%sp)
        br      L%repfix
L%41:
        mov.l   16(%fp),%a2
        mov.l   running,RUNNING(%fp)
        mov.l   &0,%d0                  #   fromnim = msg->flags & FROMNIM;
        mov.b   MFLG(%a2),%d0
        and.l   &8,%d0
        mov.l   %d0,FROMNIM%(%fp)
        mov.b   MFLG(%a2),%d0           #   accepted = msg->flags &
                                        #   ACCEPTED;
        and.b   &0x80,%d0
        mov.b   %d0,ACCEPTED%(%fp)
        and.b   &0x73,MFLG(%a2)         #msg->flags &= ~(FROMNIM|ACCEPTED|
                                        #   LRING)
        mov.l   8(%fp),%d0              #   switch (mode) {
        cmp.l   %d0,&4
        bhi     L%DEFAULT
        add.w   %d0,%d0
        mov.w   10(%pc,%d0.w),%d0
        jmp     6(%pc,%d0.w)
        swbeg   &5
L%149:
        short   L%DIRECT-L%149
        short   L%LOCAL-L%149
        short   L%ALL-L%149
```

```
        short   L%NEXT-L%149
        snort   L%LEVEL-L%149
#

#       case DIRECT:
#         if (msg->flags & ERROR) {
#         if (p = makepcb(dest.pid)) {
#           if ((msg->flags & CALLED) && (p->k_code==(char)CALL)) {
#             p->k_code &= SUSPENDED;
#             p->d0 = OL;
#             insert_fifo(p);
#           }
#           msg_err(p->parent,msg);
#         }
#         else
#           msg_err(root,msg);
#         }
#         else if (*((char *)(&dest.pid)) != ((char)this_cell)) {
#         if (this_cell) {
#           munlink(msg,r);
#           tonim_xmit(msg,mode,dest);
#         }
#         else {
#           msg_err(r,msg);
#           if (msg->flags & CALLED)
#             return(FALSE);
#         }
#         }
#         else {
#         if (p = makepcb(dest.pid))
#           queue_msg(msg,p);
#         else if (!fromnim) {
#           msg_err(r->parent,msg);
#           if (msg->flags & CALLED)
#             return(FALSE);
#         }
#         else {
#           msg->flags |= ERROR;
#           munlink(msg,r);
#           tonim_xmit(msg,DIRECT,dest);
#         }
#         }
#         break;
L%DIRECT:
        mov.l   12(%fp),(%sp)
        jsr     makepcb
        mov.l   %a0,%a3
        btst    &4,MFLG(%a2)
        beq.b   L%45
        mov.l   %a3,%d0
        beq.b   L%46
        btst    &6,MFLG(%a2)
        beq.b   L%47
        cmp.b   KCD(%a3),&4
        bne.b   L%47
        and.b   &-128,KCD(%a3)
```

```
        mov.l   %a3,(%sp)
        jsr     insert_fifo
L%47:
        mov.l   %a2,(%sp)
        mov.l   (%a3),-(%sp)
        jsr     msg_err
        br      L%%1
L%46:
        mov.l   %a2,(%sp)
        mov.l   &root,-(%sp)
        jsr     msg_err
        br      L%%1
L%45:
        mov.b   12(%fp),%d0     # if *((char *)(&dest.pid))!=((char)
                                    this_cell)
        cmp.b   %d0,this_cell+3
        beq.b   L%50
        tst.b   this_cell+3
        beq     L%51
        br      L%112x
L%50:
        mov.l   %a3,%d0
        beq.b   L%55
        mov.l   %a3,(%sp)
        br      L%%3
L%55:
        tst.l   FROMNIM%(%fp)
        bne.b   L%57
        mov.l   %a2,(%sp)
        mov.l   RUNNING(%fp),%a0
        mov.l   (%a0),-(%sp)
L%%14:
        jsr     msg_err
        add.l   &4,%sp
        btst    &6,MFLG(%a2)
        beq     L%RetTrue
        br      L%DEFAULT
L%57:
        bset    &4,MFLG(%a2)
        mov.l   RUNNING(%fp),(%sp)
        mov.l   %a2,-(%sp)
        jsr     munlink
        add.l   &4,%sp
        mov.l   12(%fp),(%sp)
        pea     0
        mov.l   %a2,-(%sp)
        br      L%%2
#

#       case LOCAL:
#           found = FALSE;
#           i = hash(dest.proc_name);
#           q = (r->pht)? r: r->parent;
#           p = *(q->pht+i);
#           for (; !found && p!=NULL; p=p->next_hash)
#           if (!strcmp(p->p_name,dest.proc_name)&&(p!=r)) {
#               found = TRUE;
```

```
#          }
#          for (; p =NULL; p=p->next_hash)
#          if (!strcmp(p->p_name,dest.proc_name)&&(p!=r)) {
#       .. m = my_allocmem(msg->size+sizeof(MSG));
#             memcpy(m,msg,msg->size+sizeof (MSG));
#             m->next = m->prev = NULL;
#             queue_msg(m,p);
#          }
#          if (q->parent && !found) {
#          msg_err(r,msg);
#          if (msg->flags & CALLED)
#             return(FALSE);
#          }
#          else if (!q->parent) {
#          if (!fromnim) {                           /* not from NIM */
#           ·if (found && this_cell) {
#             m = my_allocmem(msg->size+sizeof(MSG));
#             memcpy(m,msg,msg->size+sizeof (MSG));
#             m->next = m->prev = NULL;
#             m->flags |= ACCEPTED;
#             tonim_xmit(m,mode,dest);
#           }
#           else if (this_cell) {
#             munlink(msg,r);
#             tonim_xmit(msg,mode,dest);
#           }
#           else if (!found) {
#             msg_err(r,msg);
#             if (msg->flags & CALLED)
#                return(FALSE);
#           }
#          }
#          else if (!accepted) {                      /* from NIM, not
                                                          accepted */
#           . if (found) {
#             m = my_allocmem(msg->size+sizeof(MSG));
#             memcpy(m,msg,msg->size+sizeof (MSG));
#             m->next = m->prev = NULL;
#             m->flags |= ACCEPTED | FROMNIM;
#          .  . tonim_xmit(m,mode,dest);            .
#           }
#           else {
#             if (fromnim)
#                 msg->flags |= FROMNIM;
#             munlink(msg,r);
#             tonim_xmit(msg,mode,dest);
#           }
#          }
#          else if (!found)                 .         /* from NIM, accepted, not
                                                          found */
#          cx_freemem(msg+1);
#          }
#       break;
   L%LOCAL:
          clr.b   FOUND%(%fp)
          mov.l   12(%fp),(%sp)
          jsr     hash
          mov.w   %d0,I%(%fp)
```

```
                mov.l   RUNNING(%fp),%a4
                tst.l   4(%a4)
                bne.b   L%62
                mov.l   (%a4),%a4
        L%62:
                mov.w   I%(%fp),%d0
                lsl.w   &2,%d0
                mov.l   4(%a4),%a1
                mov.l   0(%a1,%d0.w),%a3
                br.b    L%65
        L%%4:
                mov.l   12(%fp),%a0
                lea     28(%a3),%a1
        Z%1:
                mov.b   (%a0)+,%d0
                cmp.b   %d0,(%a1)+
                bne.b   L%66
                tst.b   %d0
                bne.b   Z%1
                cmp.l   %a3,RUNNING(%fp)
                beq.b   L%66
                mov.l   &1,%d0
                mov.b   %d0,FOUND%(%fp)
                mov.l   %a3,(%sp)
                mov.l   %a2,-(%sp)
                jsr     queue_msg
                add.l   &4,%sp
                mov.l   8(%a3),%a3
                br      L%64
        L%66:
                mov.l   8(%a3),%a3
        L%65:
                mov.l   %a3,%d0
                bne.b   L%%4
                br      L%64
        #

        #   case ALL:
        #     i = hash(dest.proc_name);
        #     q = (r->pht)? r: r->parent;
        #     for (found = FALSE; !found&&q; q = q->parent) {
        #     p = *(q->pht+i);
        #     for (; !found && p!=NULL; p=p->next_hash)
        #       if (!strcmp(p->p_name,dest.proc_name)&&(p!=r)) {
        #         found = TRUE;
        #         queue_msg(msg,p);
        #       }
        #     for (; p!=NULL; p=p->next_hash)
        #       if (!strcmp(p->p_name,dest.proc_name)&&(p!=r)) {
        #         m = my_allocmem(msg->size+sizeof(MSG));
        #         memcpy(m,msg,msg->size+sizeof (MSG));
        #         m->next = m->prev = NULL;
        #         queue_msg(m,p);
        #       }
        #     }
        #     if (!q) {
```

```
#          if (found && this_cell) {
#            m = my_allocmem(msg->size+sizeof(MSG));
#            memcpy(m,msg,msg->size+sizeof (MSG));
#            m->next = m->prev = NULL;
#            m->flags |= ACCEPTED;
#            tonim_xmit(m,mode,dest);
#          }
#          else if (this_cell) {
#            munlink(msg,r);
#            tonim_xmit(msg,mode,dest);
#          }
#          else if (!found) {
#            msg_err(r,msg);
#            if (msg->flags & CALLED)
#              return(FALSE);
#          }
#        }
#        else if (!accepted) {
#          if (found) {
#            m = my_allocmem(msg->size+sizeof(MSG));
#            memcpy(m,msg,msg->size+sizeof (MSG));
#            m->next = m->prev = NULL;
#            m->flags |= ACCEPTED | FROMNIM;
#            tonim_xmit(m,mode,dest);
#          }
#          else {
#            if (fromnim)
#                msg->flags |= FROMNIM;
#            munlink(msg,r);
#            tonim_xmit(msg,mode,dest);
#          }
#        }
#        else if (!found)
#          cx_freemem(msg+1);
#      }
#      break;
L%ALL:
        mov.l    12(%fp),(%sp)
        jsr      hash
        mov.w    %d0,I%(%fp)
        mov.l    RUNNING(%fp),%a4
        tst.l    4(%a4)
        bne.b    L%90
        mov.l    (%a4),%a4
L%90:
        clr.b    FOUND%(%fp)
        br       L%93
L%%12:
        mov.w    I%(%fp),%d0
        lsl.w    &2,%d0
        mov.l    4(%a4),%a1
        mov.l    0(%a1,%d0.w),%a3
        br.b     L%96
L%%5:
        mov.l    12(%fp),%a0
        lea      28(%a3),%a1
```

```
Z%2:
        mov.b   (%a0)+,%d0
        cmp.b   %d0,(%a1)+
        bne.b   L%97
        tst.b   %d0
        bne.b   Z%2
        cmp.l   %a3,RUNNING(%fp)
        beq.b   L%97
        mov.l   &1,%d0
        mov.b   %d0,FOUND%(%fp)
        mov.l   %a3,(%sp)
        mov.l   %a2,-(%sp)
        jsr     queue_msg
        add.l   &4,%sp
        mov.l   8(%a3),%a3
        br      L%95
L%97:
        mov.l   8(%a3),%a3
L%96:
        mov.l   %a3,%d0
        bne.b   L%%5
        br      L%95
#

#       case NEXT:
#         i = hash(dest.proc_name);
#         found = FALSE;
#         if (!strcmp(dest.proc_name,r->p_name)) {
#         for (q=r,p=q->next_hash; !found ; p=p->next_hash) {
#           if (!p) {
#             if (!this_cell || r->parent->parent)
#               p = *(r->parent->pht+i);
#             else {
#               msg->flags |= LRING;
#               break;
#             }
#           }
#           if (!strcmp(p->p_name,dest.proc_name)) {
#             found = TRUE;
#             queue_msg(msg,p);
#             break;
#           }
#         }
#         q = r->parent->parent;
#         }
#         else
#         q = r->parent;
#         for (; !found&&q; q = q->parent) {
#         for (p = *(q->pht+i); p!=NULL; p=p->next_hash)
#           if (!strcmp(p->p_name,dest.proc_name)) {
#             found = TRUE;
#             queue_msg(msg,p);
#             break;
#           }
#         }
#         if (!q) {
```

```
#          m = my_allocmem(msg->size+sizeof(MSG));
#          memcpy(m,msg,msg->size+sizeof (MSG));
#          m->next = m->prev = NULL;
#          m->flags |= ACCEPTED | FROMNIM;
#          tonim_xmit(m,mode,dest);
#        }
#        else if (!found && this_cell) {
#          if (fromnim)
#              msg->flags |= FROMNIM;
#          munlink(msg,r);
#          tonim_xmit(msg,mode,dest);
#        }
#        else if (!found) {
#          msg_err(r,msg);
#          if (msg->flags & CALLED)
#            return(FALSE);
#        }
#      }
#      break;
#
L%NEXT:
          mov.l    12(%fp),(%sp)
          jsr      hash
          mov.w    %d0,I%(%fp)
          clr.b    FOUND%(%fp)
          mov.l    RUNNING(%fp),%a0
          lea      28(%a0),%a1
          mov.l    12(%fp),%a0
Z%3:
          mov.b    (%a0)+,%d0
          cmp.b    %d0,(%a1)+
          bne      L%117
          tst.b    %d0
          bne.b    Z%3
          mov.l    RUNNING(%fp),%a4
          mov.l    8(%a4),%a3
          br.b     L%120
L%123:
          mov.w    I%(%fp),%d0
          lsl.w    &2,%d0
          mov.l    RUNNING(%fp),%a1
          mov.l    (%a1),%a1
          mov.l    4(%a1),%a1
          mov.l    0(%a1,%d0.w),%a3
L%121:
          mov.l    12(%fp),%a0
          lea      28(%a3),%a1
Z%4:
          mov.b    (%a0)+,%d0
          cmp.b    %d0,(%a1)+
          bne      L%125
          tst.b    %d0
          bne.b    Z%4
          mov.l    &1,%d0
          mov.b    %d0,FOUND%(%fp)
          mov.l    %a3,(%sp)
```

```
                mov.l    %a2,-(%sp)
                jsr      queue_msg
                add.l    &4,%sp
                br.b     L%119
        L%125:
                mov.l    8(%a3),%a3
        L%120:
                tst.b    FOUND%(%fp)
                bne.b    L%119
                mov.l    %a3,%d0
                bne.b    L%121
                tst.b    this_cell+3
                beq.b    L%123
                mov.l    RUNNING(%fp),%a0
                mov.l    (%a0),%a0
                tst.l    (%a0)
                bne      L%123
                or.b     &0x04,MFLG(%a2)
                br.b     L%%6
        L%119:
                mov.l    RUNNING(%fp),%a0
                mov.l    (%a0),%a0
                br.b     L%%6
        L%117:
                mov.l    RUNNING(%fp),%a0
        L%%6:
                mov.l    (%a0),%a4
                br.b     L%126
        L%%8:
                mov.w    I%(%fp),%d0
                lsl.w    &2,%d0
                mov.l    4(%a4),%a1
                mov.l    0(%a1,%d0.w),%a3
                br.b     L%132
        L%%7:
                mov.l    12(%fp),%a0
                lea      28(%a3),%a1
        Z%5:
                mov.b    (%a0)+,%d0
                cmp.b    %d0,(%a1)+
                bne.b    L%133
                tst.b    %d0
                bne.b    Z%5
                mov.l    &1,%d0
                mov.b    %d0,FOUND%(%fp)
                mov.l    %a3,(%sp)
                mov.l    %a2,-(%sp)
                jsr      queue_msg
                add.l    &4,%sp
                br.b     L%131
        L%133:
                mov.l    8(%a3),%a3
        L%132:
                mov.l    %a3,%d0
                bne.b    L%%7
        L%131:
```

```
            mov.l   (%a4),%a4
    L%126:
            tst.b   FOUND%(%fp)
            bne.b   L%128
            mov.l   %a4,%d0
            bne.b   L%%8
    L%128:
            mov.l   %a4,%d0
            bne     L%RetTrue
            tst.b   FOUND%(%fp)
            beq.b   L%135
            tst.l   FROMNIM%(%fp)
            bne     L%fixnim
    L%135:
            tst.b   FOUND%(%fp)
            bne     L%137
            br      L%104
    #

    #     case LEVEL:
    #       if (dest.proc_name[0]=='s')
    #       queue_msg(msg,r);
    #       else if (dest.proc_name[0]=='c')
    #       if (r->parent)
    #         queue_msg(msg,r->parent);
    #       else
    #         return(FALSE);
    #       else {
    #           reperr(X_XMITMODE);
    #           return(FALSE);
    #       }
    #       break;
    L%LEVEL:
            mov.l   12(%fp),%a0
            cmp.b   (%a0),&115
            bne.b   L%142
            mov.l   RUNNING(%fp),(%sp)
            br.b    L%%3
    L%142:
            cmp.b   (%a0),&99
            bne.b   L%144
            mov.l   RUNNING(%fp),%a0
            tst.l   (%a0)
            beq.b   L%145
            mov.l   (%a0),(%sp)
    L%%3:
            mov.l   %a2,-(%sp)
            jsr     queue_msg
    L%%1:
            add.l   &4,%sp
            mov.l   &1,%d0
            br      L%26
    L%144:
            mov.l   &x_xmitmode,-(%sp)
    L%repfix:
            bsr     reperr
```

```
L%145:
        mov.l    &0,%d0                      #    return(FALSE);
L%26:
        movm.l   S%1(%fp),&0x3c00
        unlk     %fp
        rts
L%%10:
        mov.l    12(%fp),%a0
        lea      28(%a3),%a1
Z%6:
        mov.b    (%a0)+,%d0
        cmp.b    %d0,(%a1)+
        bne.b    L%70
        tst.b    %d0
        bne.b    Z%6
        cmp.l    %a3,RUNNING(%fp)
        beq.b    L%70
        mov.l    MSIZ(%a2),%d0
        add.l    &24,%d0
        mov.l    %d0,(%sp)
        jsr      my_allocmem
        mov.l    %a0,%a5
        mov.l    (%sp),%d0
        add.l    &3,%d0
        lsr.l    &2,%d0
        mov.l    %a2,%a1
        br.b     Q%1
P%1:
        swap     %d0
Q%1:
        mov.l    (%a1)+,(%a0)+
        dbra     %d0,Q%1
        swap     %d0
        dbra     %d0,P%1
        sub.l    %a0,%a0
        mov.l    %a0,MPRV(%a5)
        mov.l    %a0,(%a5)
        mov.l    %a3,(%sp)
        mov.l    %a5,-(%sp)
        jsr      queue_msg
        add.l    &4,%sp
L%70:
        mov.l    8(%a3),%a3
L%64:
        mov.l    %a3,%d0
        bne.b    L%%10
        tst.l    (%a4)
        beq.b    L%71
        tst.b    FOUND%(%fp)
        beq      L%51
L%71:
        tst.l    (%a4)
        bne      L%RetTrue
        tst.l    FROMNIM%(%fp)
        beq      L%%11
        tst.b    ACCEPTED%(%fp)
```

0201065

```
        bne.b   L%83
        tst.b   FOUND%(%fp)
        bne     L%fixnim
        bset    &3,MFLG(%a2)     # if (fromnim) msg->flags |= FROMNIM;
        mov.l   RUNNING(%fp),(%sp)
        mov.l   %a2,-(%sp)
        jsr     munlink
        add.l   &4,%sp
        mov.l   12(%fp),(%sp)
        mov.l   8(%fp),-(%sp)
        mov.l   %a2,-(%sp)
        jsr     tonim_xmit       # 1
        add.l   &8,%sp
        mov.l   &1,%d0
        br      L%26
L%111:
L%83:
        tst.b   FOUND%(%fp)
        bne     L%RetTrue
        lea.l   24(%a2),%a0
        mov.l   %a0,(%sp)
        jsr     cx_freemem
        br      L%RetTrue
L%93:
        tst.b   FOUND%(%fp)
        bne.b   L%92
        mov.l   %a4,%d0
        bne     L%%12
L%92:
        mov.l   %a4,%d0
        bne     L%RetTrue
        tst.l   FROMNIM%(%fp)
        bne.b   L%103
L%%11:
        tst.b   FOUND%(%fp)
        beq.b   L%76
        tst.b   this_cell+3
        bne.b   L%%9
        br.b    L%78
L%104:
L%76:
        tst.b   this_cell+3
        bne     L%112x
L%137:
L%78:
        tst.b   FOUND%(%fp)
        bne     L%RetTrue
L%51:
        mov.l   %a2,(%sp)
        mov.l   RUNNING(%fp),-(%sp)
        br      L%%14
L%103:
        tst.b   ACCEPTED%(%fp)
        bne     L%111
        tst.b   FOUND%(%fp)
        beq.b   L%112
```

```
            br      L%fixnim
    L%%9:
            mov.l   MSIZ(%a2),%d0
            add.l   &24,%d0
            mov.l   %d0,(%sp)
            jsr     my_allocmem
            mov.l   %a0,%a5
            mov.l   (%sp),%d0
            add.l   &3,%d0
            lsr.l   &2,%d0
            mov.l   %a2,%a1
            br.b    Q%2
    P%2:
            swap    %d0
    Q%2:
            mov.l   (%a1)+,(%a0)+
            dbra    %d0,Q%2
            swap    %d0
            dbra    %d0,P%2
            sub.l   %a0,%a0
            mov.l   %a0,MPRV(%a5)
            mov.l   %a0,(%a5)
            bset    &7,MFLG(%a5)
            mov.l   12(%fp),(%sp)
            mov.l   8(%fp),-(%sp)
            mov.l   %a5,-(%sp)
            br.b    L%%2
    L%112:
            tst.l   FROMNIM%(%fp)    # if (fromnim) msg->flags |= FROMNIM;
            beq.b   L%112x
            bset    &3,MFLG(%a2)
    L%112x:
            mov.l   RUNNING(%fp),(%sp)
            mov.l   %a2,-(%sp)
            jsr     munlink
            add.l   &4,%sp
            mov.l   12(%fp),(%sp)
            mov.l   8(%fp),-(%sp)
            mov.l   %a2,-(%sp)
    L%%2:
            jsr     tonim_xmit      # 2
            add.l   &8,%sp
    L%RetTrue:
            mov.l   &1,%d0
            br      L%26
    L%%15:
            mov.l   12(%fp),%a0
            lea     28(%a3),%a1
    Z%7:
            mov.b   (%a0)+,%d0
            cmp.b   %d0,(%a1)+
            bne.b   L%101
            tst.b   %d0
            bne.b   Z%7
            cmp.l   %a3,RUNNING(%fp)
            beq.b   L%101
```

```
        mov.l   MSIZ(%a2),%d0
        add.l   &24,%d0
        mov.l   %d0,(%sp)
        jsr     my_allocmem
        mov.l   %a0,%a5
        mov.l   (%sp),%d0
        add.l   &3,%d0
        lsr.l   &2,%d0
        mov.l   %a2,%a1
        br.b    Q%3
P%3:
        swap    %d0
Q%3:
        mov.l   (%a1)+,(%a0)+
        dbra    %d0,Q%3
        swap    %d0
        dbra    %d0,P%3
        sub.l   %a0,%a0
        mov.l   %a0,MPRV(%a5)
        mov.l   %a0,(%a5)
        mov.l   %a3,(%sp)
        mov.l   %a5,-(%sp)
        jsr     queue_msg
        add.l   &4,%sp
L%101:
        mov.l   8(%a3),%a3
L%95:
        mov.l   %a3,%d0
        bne.b   L%%15
        mov.l   (%a4),%a4
        br      L%93

L%fixnim:
        mov.l   MSIZ(%a2),%d0
        add.l   &24,%d0
        mov.l   %d0,(%sp)
        jsr     my_allocmem
        mov.l   %a0,%a5
        mov.l   (%sp),%d0
        add.l   &3,%d0
        lsr.l   &2,%d0
        mov.l   %a2,%a1
        br.b    Q%fx
P%fx:
        swap    %d0
Q%fx:
        mov.l   (%a1)+,(%a0)+
        dbra    %d0,Q%fx
        swap    %d0
        dbra    %d0,P%fx
        sub.l   %a0,%a0
        mov.l   %a0,MPRV(%a5)
        mov.l   %a0,(%a5)
        or.b    &0x88,MFLG(%a5)  # m->flags |= ACCEPTED | FROMNIM;
        mov.l   12(%fp),(%sp)
        mov.l   8(%fp),-(%sp)
```

0201065

```
        mov.l    %a5,-(%sp)
        jsr      tonim_xmit
        add.l    &8,%sp
        mov.l    &1,%d0
        br       L%26
```

PROGRAM LISTING C

```
/*
 *      File name:      kerntypes.h
 *
 *      Author:         Andrew Kun
 *
 *      Description:    This file contains global definitions of the Kernel
 *                      constants and data structure types
 *
 */

#ifndef EVHI

#define         PROC            void

#define         SUSPENDED       0x80
#define         EESP            0x40

#define         INTMASK         0x0700

enum kcalls  {NOCODE,PUT,FORWARD,GET,CALL,REPLY,EXIT,CONNECT,DISCONNECT,
                ALLOCMEM,FREEMEM,P_CREATE,RELEASE,SUSPEND,RESTART,ANY_MSG} ;

enum sysers {NIMALLOC,NIMFREE,NIMMODE,NIMREQ} ;

/* bit positions of the flags */

#define         ACCEPTED        0x80
#define         CALLED          0x40
#define         REPLIED         0x20
#define         ERROR           0x10
#define         FROMNIM         0x08
#define         LRING           0x04

typedef struct msg {
    struct msg *next, *prev;
    unsigned char flags;
    unsigned char mode;
    long pid;
    struct pcb *owner;
    unsigned long size;
    unsigned char priority;
    unsigned char mid;
} MSG;


/*      Process Control Block: what is specific for each process        */

#define PHTSIZE 64

typedef struct pcb {
    struct pcb *parent;         /* pointer to the parent process        */
    struct pcb **pht;           /* ptr to hash table, if NULL: not ctx  */
    struct pcb *next_hash;      /* ptr to next sibling (with same hash index) *
    struct pcb *link;           /* ptr to the ready-to-run-queue        */
    MSG *m_first, *m_last;      /* pointers to enqueued (waiting) messages  */
    MSG *mq;                    /* ptr to queue of messages being processed */
```

```
        char p_name[MAXNAM];         /* process instance name                */
        long pid;                    /* process instance id                 */
        char c_pri;                  /* process priority                    */
        char k_code;                 /* process state: used by the scheduler */
        unsigned char mid;           /* message id.  currently being Call-Replied */
        unsigned char flags;         /* t.b.d.                              */
        int *stack;                  /* stack start address (virtual)       */
        long *c_stck;                /* current stack pointer               */
        long d0;                     /*      68000 registers                */
        long d1;
        long d2;
        long d3;
        long d4;
        long d5;
        long d6;
        long d7;
        long a0;
        long a1;
        long a2;
        long a3;
        long a4;
        long a5;
        long a6;
        long pc;
        short sr;
        short crtcount;              /* # of child processes being precreated  */
        struct ptmdef *ptmptr;       /* template definition pointer         */
        struct crtrap *susptrap;     /* susp'd precr'r parent trap, NULL if none
                                        -1, if not immediate parent trapped */
        struct trtrap *termtrap;     /* termination trap                    */
        long time_snap;
        long exec_time;              /* total process execution time        */
        long act_time;               /* process activation time             */
#if PERFMON
        long time_snap;
        int gets;
        int puts;
        int calls;
        int forwards;
        int replies;
        int allocs;
        int frees;
        bool termd;
#endif
} PCB;


#if PERFMON
enum EXMOD { TOTAL , HASHEDIN , DELHASH };
#endif



#define        EVLO         2
#define        EVHI         267
```

0201065

```
typedef struct ct {
    PCB *pcb;
    MSG *msg;
} CT;

/* Error types  */

#define      X_PRIMITIVE    257      /* bad kernel primitive       */
#define      X_XMITMODE     258      /* bad transmission mode       */
#define      X_POINTER      259      /* pointer to an odd address   */
#define      X_LEVEL        260      /* bad interrupt level         */
#define      X_INTERRUPT    261      /* fatal interrupt             */
#define      X_FAKEMSG      262      /* message isn't real          */
#define      X_STOLENMSG    263      /* message has been stolen     */
#define      X_FREEDMSG     264      /* message has been freed      */
#define      X_ALLOCEDMSG   265      /* message wasn't gotten       */
#define      X_SMALLMSG     266      /* message isn't EE            */

#endif
```

PROGRAM LISTING D

```
        MODULE NAME  :  eesr.c
        SUBSYSTEM NAME  :   kernel
        DATE & TIME OF CREATION  :      %E%     12:53:27
        DATE & TIME OF COMPIL⌐TION  : . 85/03/25     16:32:37
        VERSION  :     1.7
        PROGRAMMER  :   Andrew Kun
        DESCRIPTION  : External event management module.
        PARAMETERS PASSED  : As per General Services Interface Guide rev.3
        PARAMETERS RETURNED: As per General Services Interface Guide rev.3
*/


#include "local/cx.h"
#include "local/os/vers.h"
#include "local/os/eesp.h"
#include "local/os/kerntypes.h"

extern CT conn_tab[];

bool cx_connect (level, msg)
int level;
MSG *msg;
{
  extern void event_switch();
  extern PCB *running;

  if (conn_tab[level].pcb)
    return(FALSE);
  if (msg) {
    conn_tab[level].msg = msg-1;
    strcpy(msg,"event");
    ((EE *)msg)->event_level = level;
  }
  else
    conn_tab[level].msg = 0;
  conn_tab[level].pcb = running;
  if (level < 256)
    *((int *)(level*4)) = (int) event_switch;
  return(TRUE);
}


bool cx_disconnect (level)
int level;
{
  if (conn_tab[level].pcb != running)
    return(FALSE);
```

```
    conn_tab[level].pcb = NULL;
    conn_tab[level].msg = NULL;
    return(TRUE);
}

void cx_release ()
{
    extern PCB *running;

    running->sr &= ~INTMASK;
    running->flags &= ~EESP;
}


bool cx_suspend (pid)
long pid;
{
    extern PCB *makepcb();

    register PCB *p;

    if (!(p = makepcb(pid)) || (p->k_code & SUSPENDED))
        return(FALSE);
    p->k_code |= SUSPENDED;
    return(TRUE);
}


bool cx_restart (pid)
long pid;
{
    extern PCB *makepcb();
    extern void insert_fifo();

    register PCB *p;

    if (!(p = makepcb(pid)) || !(p->k_code & SUSPENDED))
        return(FALSE);
    p->k_code &= ~SUSPENDED;
    if (p->k_code == (char)NOCODE)
        insert_fifo(p);
    return(TRUE);
}


void event_init()
{
 .  extern void event_switch();

    int i;
    long *p;

    for (i=0/*,p=(long *)(EVLO*4)*/; i<=EVHI; i++) {
/*      *p++ = (long) event_switch; */
      conn_tab[i].pcb = NULL;
      conn_tab[i].msg = NULL;
    }
}
```

0201065

```
        file    "kentry.s"

        set     MAXPRI,63
# MSG offsets
        set     MNXT,0
        set     MPRV,4
        set     MFLG,8
        set     MMOD,9
        set     MPID,10
        set     MOWN,14                 # owner PCB.
        set     MSIZ,18
        set     MPRI,22
        set     MMID,23
# EESP msg offsets
        set     EMSG,24
        set     ELEV,32
        set     EPID,36
# PCB offsets
        set     LNK,12                  # link pointer
        set     PID,44                  # PCB pid.
        set     PRI,48                  # priority
        set     KCD,49                  # primitive code
        set     FLG,51                  # PCB flags
        set     SP%,56                  # current stack pointer
        set     D0%,60                  # register %d0
        set     D1%,64                  # register %d1
        set     D2%,68                  # register %d2
        set     D3%,72                  # register %d3
        set     D4%,76                  # register %d4
        set     D5%,80                  # register %d5
        set     D6%,84                  # register %d6
        set     D7%,88                  # register %d7
        set     A0%,92                  # register %a0
        set     A1%,96                  # register %a1
        set     A2%,100                 # register %a2
        set     A3%,104                 # register %a3
        set     A4%,108                 # register %a4
        set     A5%,112                 # register %a5
        set     A6%,116                 # register %a6
        set     PC%,120                 # register %pc
        set     SR%,124                 # register %sr
        set     EXC,144                 # execution time
        set     ACT,148                 # last activation
# Error levels
        set     x_primitive,257         # bad kernel primitive
        set     x_xmitmode,258          # bad transmission mode
        set     x_pointer,259           # pointer to an odd address
        set     x_level,260             # bad interrupt level
        set     x_interrupt,261         # fatal interrupt
        set     x_fakemsg,262           # message isn't a real message
        set     x_stolenmsg,263         # message isn't owned by requester
        set     x_freedmsg,264          # message has been freed
        set     x_allocedmsg,265        # message was alloced, not gotten
        set     x_smallmsg,266          # message is too small for connect
# EESP levels
        set     EVLO,2
```

```
        set     EVHI,267

        text

        global  cx_initialize
        global  k_entry
        global  tick
        global  event_switch

cx_initialize:
        mov.w   &0x2700,%sr
        mov.l   &0x1000,%sp
        jsr     start_up                # start_up();
        mov.w   &0,-(%sp)               # schedule();
        jmp     L%schedule

k_entry:
        mov.w   &0x2700,%sr
        clr.w   suspended
        movm.l  &0xc0c0,-(%sp)          # %d0-%d1/%a0-%a1
        sub.w   &1,%d0                  # switch (running->d0) {
        cmp.w   %d0,&14
        bhi     L%primerr
        add.w   %d0,%d0
        mov.w   10(%pc,%d0.w),%d0
        jmp     6(%pc,%d0.w)
        swbeg   &15
L%63:
        short   L%PUT-L%63
        short   L%FORWARD-L%63
        short   L%GET-L%63
        short   L%CALL-L%63
        short   L%REPLY-L%63
        short   L%EXIT-L%63
        short   L%CONNECT-L%63
        short   L%DISCONNECT-L%63
        short   L%ALLOCMEM-L%63
        short   L%FREEMEM-L%63
        short   L%P_CREATE-L%63
        short   L%RELEASE-L%63
        short   L%SUSPEND-L%63
        short   L%RESTART-L%63
        short   L%ANY_MSG-L%63

L%PUT:
        mov.l   %a1,%d0                 # if (!msg ||
        beq     L%fakemsg
        sub.l   heapstart,%d0           # msg < heapstart ||
        blt     L%fakemsg
        sub.l   &24,%d0                 #   ((msg - 1) - heapstart) &
        and.l   h_unitm1,%d0           #   (h_unit - 1))
        bne     L%fakemsg              #   then reperr (X_FAKEMSG);
        mov.l   (MOWN - 24)(%a1),%d0    # if ((msg - 1)->owner
        cmp.l   %d0,running            #   != running)
        bne     L%stolenmsg           #   then reperr (X_STOLENMSG);
        movm.l  &0x40c0,-(%sp)
```

0201065

```
        bsr.w   cx_put          # cx_put(running->d1,a0,a1);
        add.l   &12,%sp
        br      L%49            # break;

L%FORWARD:
        mov.l   %a1,%d0         # if (!msg ||
        beq     L%fakemsg
        sub.l   heapstart,%d0   # msg < heapstart ||
        blt     L%fakemsg
        sub.l   &24,%d0         #   ((msg - 1) - heapstart) &
        and.l   h_unitm1,%d0    #   (h_unit - 1))
        bne     L%fakemsg       #   then reperr (X_FAKEMSG);
        mov.l   (MOWN - 24)(%a1),%d0   # if ((msg - 1)->owner
        cmp.l   %d0,running     #   != running)
        bne     L%stolenmsg     #   then reperr (X_STOLENMSG);
        mov.l   (MPID - 24)(%a1),%d0   # if (!(msg - 1)->pid)
        beq     L%allocedmsg    #   then reperr (X_ALLOCEDMSG);
        movm.l  &0x40c0,-(%sp)
        bsr.w   cx_forward      # cx_forward(running->d1,a0,a1);
        add.l   &12,%sp
        br      L%49            # break;


L%GET:
        mov.l   %a0,%d0
        btst    &0,%d0
        bne     L%ptrerr
        mov.l   %a1,%d0
        btst    &0,%d0
        bne     L%ptrerr
        movm.l  &0x40c0,-(%sp)
        bsr.w   cx_get          # cx_get(running->d1,a0,a1);
        add.l   &12,%sp
        br      L%49            # break;


L%CALL:
        mov.l   %a1,%d0         # if (!msg ||
        beq     L%fakemsg
        sub.l   heapstart,%d0   # msg < heapstart ||
        blt     L%fakemsg
        sub.l   &24,%d0         #   ((msg - 1) - heapstart) &
        and.l   h_unitm1,%d0    #   (h_unit - 1))
        bne     L%fakemsg       #   then reperr (X_FAKEMSG);
        mov.l   (MOWN - 24)(%a1),%d0   # if ((msg - 1)->owner
        cmp.l   %d0,running     #   != running)
        bne     L%stolenmsg     #   then reperr (X_STOLENMSG);
        mov.l   %a2,%d0
        btst    &0,%d0
        bne     L%ptrerr
        mov.l   %a3,%d0
        btst    &0,%d0
        bne     L%ptrerr
        movm.l  &0x40f0,-(%sp)
        bsr.w   cx_call         # cx_call(running->d1,a0,a1,a2,a3);
        add.l   &20,%sp
        br      L%49            # break;
```

```
L%REPLY:
        mov.l   %a0,%d0                  # if (!msg ||
        beq     L%fakemsg
        sub.l   heapstart,%d0            # msg < heapstart ||
        blt     L%fakemsg
        sub.l   &24,%d0                  #    ((msg - 1) - heapstart) &
        and.l   h_unitm1,%d0             #    (h_unit - 1))
        bne     L%fakemsg                #    then reperr (X_FAKEMSG);
        mov.l   (MOWN - 24)(%a0),%d0     # if ((msg - 1)->owner
        cmp.l   %d0,running             #    != running)
        bne     L%stolenmsg             #    then reperr (X_STOLENMSG);
        mov.l   %a1,%d0                  # if (!msg ||
        beq     L%fakemsg
        sub.l   heapstart,%d0            # msg < heapstart ||
        blt     L%fakemsg
        sub.l   &24,%d0                  #    ((msg - 1) - heapstart) &
        and.l   h_unitm1,%d0            #    (h_unit - 1))
        bne     L%fakemsg               #    then reperr (X_FAKEMSG);
        mov.l   (MOWN - 24)(%a1),%d0     # if ((msg - 1)->owner
        cmp.l   %d0,running             #    != running)
        bne     L%stolenmsg             #    then reperr (X_STOLENMSG);
        mov.l   (MPID - 24)(%a0),%d0     # if (!(msg - 1)->pid)
        beq     L%allocedmsg            #    then reperr (X_ALLOCEDMSG);
        movm.l  &0x00c0,-(%sp)
        bsr.w   cx_reply                 # cx_reply(running->a0,a1);
        add.l   &8,%sp
        br      L%49                     # break;


L%EXIT:
        mov.l   %a0,%d0                  # if (!msg ||
        beq     L%fakemsg
        sub.l   heapstart,%d0            # msg < heapstart ||
        blt     L%fakemsg
        sub.l   &24,%d0                  #    ((msg - 1) - heapstart) &
        and.l   h_unitm1,%d0            #    (h_unit - 1))
        bne     L%fakemsg               #    then reperr (X_FAKEMSG);
        mov.l   (MOWN - 24)(%a0),%d0     # if ((msg - 1)->owner
        cmp.l   %d0,running             #    != running)
        bne     L%stolenmsg             #    then reperr (X_STOLENMSG);
        mov.l   %a0,-(%sp)
        bsr.w   cx_exit                  # cx_exit(running->a0);
        add.l   &4,%sp
        br      L%49                     # break;


L%CONNECT:
        mov.l   %a0,%d0                  # if (msg &&
        beq     L%00
        sub.l   heapstart,%d0            # (msg < heapstart ||
        blt     L%fakemsg
        sub.l   &24,%d0                  #    ((msg - 1) - heapstart) &
        and.l   h_unitm1,%d0            #    (h_unit - 1)))
        bne     L%fakemsg               #    then reperr (X_FAKEMSG);
        mov.l   (MSIZ - 24)(%a0),%d0     # if ((msg - 1)->size < sizeof (EE))
        cmp.l   %d0,&16
        blt     L%smallmsg              #    then reperr (X_SMALLMSG);
        mov.l   (MOWN - 24)(%a0),%d0     # if ((msg - 1)->owner != running
```

```
        cmp.l   %d0,running
        bne     L%stolenmsg         #   then reperr (X_STOLENMSG);
L%00:
        cmp.l   %d1,&EVLO
        blt     L%lvlerr
        cmp.l   %d1,&EVHI
        bgt     L%lvlerr
        movm.l  &0x4080,-(%sp)
        bsr.w   cx_connect          # cx_connect(running->d1,a0);
        add.l   &8,%sp
        br      L%49                # break;


L%DISCONNECT:
        cmp.l   %d1,&EVLO
        blt     L%lvlerr
        cmp.l   %d1,&EVHI
        bgt     L%lvlerr
        mov.l   %d1,-(%sp)
        bsr.w   cx_disconnect       # cx_disconnect(running->d1);
        add.l   &4,%sp
        br      L%49                # break;


L%ALLOCMEM:
        mov.l   %d1,-(%sp)
        bsr.w   cx_allocmem         # cx_allocmem(running->d1);
        add.l   &4,%sp
        br      L%49                # break;


L%FREEMEM:
        mov.l   %a0,%d0             # if (!msg ||
        beq     L%fakemsg
        sub.l   heapstart,%d0       # msg < heapstart ||
        blt     L%fakemsg
        sub.l   &24,%d0             #   ((msg - 1) - heapstart) &
        and.l   h_unitm1,%d0        #   (h_unit - 1))
        bne     L%fakemsg           #    then reperr (X_FAKEMSG);
        mov.l   (MOWN - 24)(%a0),%d0    # if ((msg - 1)->owner
        cmp.l   %d0,running         #    != running)
        bne     L%stolenmsg         #    then reperr (X_STOLENMSG);
        mov.l   %a0,-(%sp)
        bsr.w   cx_freemem          # cx_freemem(running->a0);
        add.l   &4,%sp
        br      L%49                # break;


L%P_CREATE:
        mov.l   %a0,%d0             # if (!msg ||
        beq     L%fakemsg
        sub.l   heapstart,%d0       # msg < heapstart ||
        blt     L%fakemsg
        sub.l   &24,%d0             #   ((msg - 1) - heapstart) &
        and.l   h_unitm1,%d0        #   (h_unit - 1))
        bne     L%fakemsg           #    then reperr (X_FAKEMSG);
        mov.l   (MOWN - 24)(%a0),%d0    # if ((msg - 1)->owner
        cmp.l   %d0,running         #    != running)
        bne     L%stolenmsg         #    then reperr (X_STOLENMSG);
        mov.l   %a0,-(%sp)
```

```
        bsr.w   cx_p_create              # cx_p_create(running->a0);
        add.l   &4,%sp
        br.b    L%49                     # break;


L%RELEASE:
        and.w   &-1793,16(%sp)           # saved_sr &= -INTMASK
        bsr.w   cx_release               # cx_release();
        br.b    L%49                     # break;


L%SUSPEND:
        mov.l   %d1,-(%sp)
        bsr.w   cx_suspend               # cx_suspend(running->d1);
        add.l   &4,%sp
        br.b    L%49                     # break;


L%RESTART:
        mov.l   %d1,-(%sp)
        jsr     cx_restart               # cx_restart(running->d1);
        add.l   &4,%sp
        br.b    L%49                     # break;


L%ANY_MSG:
        mov.l   %d1,-(%sp)
        jsr     cx_any_msg               # cx_any_msg(running->d1);
        add.l   &4,%sp
        br.b    L%49


L%smallmsg:
        mov.l   &x_smallmsg,-(%sp)
        br.b    L%repfix

L%fakemsg:
        mov.l   &x_fakemsg,-(%sp)
        br.b    L%repfix

L%stolenmsg:
        mov.l   &x_stolenmsg,-(%sp)
        br.b    L%repfix

L%allocedmsg:
        mov.l   &x_allocedmsg,-(%sp)
        br.b    L%repfix

L%primerr:
        mov.l   &x_primitive,-(%sp)
        br.b    L%repfix

L%ptrerr:
        mov.l   &x_pointer,-(%sp)
        br.b    L%repfix

L%lvlerr:
        mov.l   &x_level,-(%sp)
L%repfix:
        bsr     reperr
        add.l   &4,%sp
```

```
            br.b      schedule

    L%49:
            mov.l     %d0,(%sp)              # schedule();

    schedule:
    #                                        # extern PCB *running;
    #                                        # extern short suspended;
            mov.l     running,%a1            # if (running->flags & EESP) {
            btst      &6,FLG(%a1)
            beq.b     L%27
            tst.w     suspended             # if (!suspended)
            beq       L%82                  #   rte();
    #                                        # else {
            mov.l     &0,-(%sp)
            mov.l     &0,-(%sp)
            bsr       save_state             # save_state();
            and.b     &0xbf,FLG(%a1)        # running->flags &= ~EESP;
            and.w     &:1793,SR%(%a1)       # running->sr &= ~INTMASK;
    #                                        # for (;;) {
    L%schedule:
    #                                        # label:
            bsr       get_hipri              # if (get_hipri()>=0)
            tst.w     %d0
    #                                        # select();
            bge.b     L%81
    #                                        # else {
    #       add.l     &1,processor_idle_ctr # processor_idle_ctr++;
            clr.l     running                # running = 0;
            stop      &0x2000                # wait();
            mov.w     &0x2700,%sr
            br.b      L%schedule

    L%27:
            tst.w     suspended             # else if (suspended) {
            beq.b     L%45
            mov.l     &0,-(%sp)
            mov.l     &0,-(%sp)
            bsr       save_state            # save_state();
            br.b      L%schedule             # goto label;

    L%45:
            bsr.b     get_hipri              # else if (get_hipri() >
                                            #                running->c_pri

            tst.w     %d0
            blt.b     L%82
            mov.l     running,%a0
            cmp.b     %d0,PRI(%a0)
            blt.b     L%82
            mov.l     %d0,-(%sp)             # save i (new pri)
            mov.l     %a1,-(%sp)             # save new PCB
            mov.l     %a0,%a1                # so that PCB is theres.
            bsr       save_state            # save_state();
            mov.l     %a1,-(%sp)             # insert_fifo(running);
            bsr.w     insert_fifo
            add.l     &4,%sp
            mov.l     %a3,%a1                # new PCB
```

```
        mov.w    %a4,%d0                  # priority.
# select()
L%81:
        lsl.w    &2,%d0                   # running = extract_fifo(&rtrq[i]);
        lea.l    rdynxt,%a0              # if (!(rtrq[i].next=rtrq[i].next-
                                                  >link
        mov.l    LNK(%a1),0(%a0,%d0.w)
        bne.b    L%83
        lea.l    rdylst,%a0
        clr.l    0(%a0,%d0.w)            # rtrq[i].last = OL;
L%83:
        mov.l    %a1,running
#       add.l    &1,process_switch_ctr   # process_switch_ctr++;

        mov.l    SP%(%a1),%a0           # restore_state();
        mov.l    %a0,%usp
        mov.l    PC%(%a1),-(%sp)        # rest. %pc
        mov.w    SR%(%a1),-(%sp)        # rest. %sr
        movm.l   DO%(%a1),&0x7fff       # d0-d7 + a0-a6
        rte
#                                        # }
#                                        # else
#                                        # rte()
L%82:
        movm.l   (%sp)+,&0x0303                 # %d0-%d1/%a0-%a1
        rte
#                                        # }


# Finds highest priority process.
# returns a0 = rdynxt[i], a1 = PCB = (rdynxt[i]), d0 = -1 or priority.
# note - int's s.b. off.

set    t1,(MAXPRI+2)*4

get_hipri:
        mov.w    &MAXPRI+1,%d0
        lea.l    rdynxt+t1,%a0
L%74:
        tst.l    -(%a0)                  # search priorities.
        dbne     %d0,L%74
        beq.b    L%72                    # rts
L%73:
        mov.l    (%a0),%a1               # pcb
        tst.b    KCD(%a1)                # k_code & suspended
        bne.b    L%71
L%72:
        rts
L%71:
        mov.l    LNK(%a1),(%a0)          # try next.
        bne.b    L%73
        lea.l    rdylst,%a1
        lsl.w    &2,%d0
        clr.l    0(%a1,%d0.w)
        lsr.w    &2,%d0
        sub.w    &1,%d0
        bra.b    L%74
```

0201065

```
# %a1 = PCB
# save_state(tmp1.l, tmp2.l, %d0, %d1, %a0, %a1, %sr, %pc)
# on exit a2=pc, a3=tmp1, a4=tmp2

save_state:
        movm.l  12(%sp),&0x0103          # a0, d1, d0              48(12/ 0)
        movm.l  &0x7fff,D0%(%a1)         # a0-a6,d7-d0            132( 3/30)
        movm.l  (%sp)+,&0x1c00           # a2=pc,a3=tmp1,a4=tmp2
        add.l   &12,%sp                  #                         14( 3/ 0)
        mov.l   (%sp)+,A1%(%a1)          #                         12( 3/ 0)
        mov.w   (%sp)+,SR%(%a1)          #                          8( 2/ 0)
        mov.l   (%sp)+,PC%(%a1)          #                         12( 3/ 0)
        mov     %usp,%a0                 #                          6( 1/ 0)
        mov.l   %a0,SP%(%a1)             #                         16( 2/ 2)
        jmp     (%a2)                    # go home                  8( 2/ 0)
#                                        #                        ----------
#                                                                 280(37/32)


#                                        # void event_switch(offs)
#                                        # short offs;
#                                        # {
event_switch:
#                                        # extern CT conn_tab[];
#                                        # register PCB *p;
#                                        # register MSG *m;
#                                        # register int offset;
#                                        # save_scratch();
        and.b   &0x7f,0xf19f11           # disable int's
        movm.l  &0xc0c0,-(%sp)           # %d0-%d1/%a0-%a1
        mov.w   %sr,%d0
        mov.w   &0x2700,%sr
        or.b    &0x80,0xf19f11           # enable int's
        mov.l   %a2,-(%sp)
        mov.w   26(%sp),%d1              # offset = offs;
        lsl.w   &1,%d1                   # if(p = conn_tab[offset].pcb) {
        mov.l   &conn_tab,%a1
        tst.l   0(%a1,%d1.w)
        beq     L%badintrpt
        mov.l   0(%a1,%d1.w),%a2
        and.w   &-1793,SR%(%a2)          # p->sr &= ~INTMASK;
        and.w   &1792,%d0
        or.w    %d0,SR%(%a2)             # p->sr |= status_reg & INTMASK;
        bset    &6,FLG(%a2)              # p->flags |= EESP;
        mov.l   4(%a1,%d1.w),%a1         # m = conn_tab[offset].msg;
        tst.l   running                  # if (running) {
        beq     L%130
        mov.l   running,%a0              # ((EE *)(m+1))->interrupted_pid =
                                         #                 running->pid
        mov.l   PID(%a0),EPID(%a1)
        cmp.l   %a2,%a0                  # if (p!=running) {
        beq.b   L%131
        mov.l   (%sp)+,%d0
        movm.l  &0x0060,-(%sp)           # save_state(running);
        mov.l   %d0,%a2
        mov.l   %a0,%a1                  # copy p -> new savestate fmt.
        bsr.w   save_state
```

```
                mov.l    %a1,-(%sp)           # if (running->flags & EESP)
                btst     &6,FLG(%a1)
                beq.b    L%133
                bsr.w    push_rtrq            # push_rtrq(running);
                br.b     L%135                # else
L%133:
                bsr.w    insert_fifo          # insert_fifo(running);
L%135:
                add.l    &4,%sp
                cmp.b    KCD(%a4),&3          # if (p->k_code == (char) GET)
                bne.b    L%137
                movm.l   &0x0018,-(%sp)       # deliver_msg(m,p);
                bsr.w    deliver_msg
                br.b     L%139
L%137:
                tst.b    KCD(%a4)             # else if (p->k_code != (char)
                                               NOCODE)
                bne.b    L%badintrpt
#                                            # else
L%140:
                mov.l    %a4,-(%sp)           # extract_rtrq(p);
                bsr.w    extract_rtrq
                mov.l    %a3,-(%sp)           # insert_msg(m,p);
                bsr.w    insert_msg
L%139:
                add.l    &8,%sp
                mov.l    %a4,%a1              # running = p;
                br       L%83                 # select();
#                                            # }
#                                            # else {
L%131:
                or.w     %d0,20(%sp)          # change_saved_sr();
                movm.l   &0x0060,-(%sp)       # insert_msg(m,p);
                bsr.w    insert_msg
                add.l    &8,%sp
                mov.l    (%sp)+,%a2               # rest_scratch();
                movm.l   (%sp)+,&0x0303          # %d0-%d1/%a0-%a1
                rte
L%145:
L%130:
                clr.l    EPID(%a1)            #((EE *)(m+1))->interrupted_pid=
                                               NULL;
                cmp.b    KCD(%a2),&3          # if (p->k_code == (char) GET) {
                bne.b    L%badintrpt
                mov.l    %a2,running          # running = p;
                movm.l   &0x0060,-(%sp)       # deliver_msg(m,p);
                bsr.w    deliver_msg
                add.l    &36,%sp              #unstack(fct_stack+trap_stack+
                                               saved_reg
                mov.l    running,%a1          # select();
                br       L%83

L%badintrpt:
                mov.l    &x_interrupt,-(%sp)
                bsr      reperr
                add.l    &12,%sp
                br       L%schedule

tick:
                rte
```

```
        MODULE NAME   :  glob.c
        SUBSYSTEM NAME   :   kernel
        DATE & TIME OF CREATION  :      %E%     12:54:00
        DATE & TIME OF COMPILATION  :   85/03/25     16:32:40
        VERSION  :     1.8
        PROGRAMMER  :   Andrew Kun
        DESCRIPTION  : This file contains the definition of the global
                       variables of the Kernel.

        PARAMETERS PASSED  :
        PARAMETERS RETURNED  :
*/

#include "local/cx.h"
#include "local/os/vers.h"
#include "local/os/eesp.h"
#include "local/os/kerntypes.h"

long sys_time = 0;              /* current time from init            */
long sys_timeslice = 4;        /* timeslice allocated for a process */
long this_cell;                /* hardware address of the cell      */
long root[2];                  /* dummy root context on cell        */
PCB *pht[PHTSIZE];             /* cell process hash table           */
PCB  *rdynxt[MAXPRI+2];        /* ready-to-run queue - next         */
PCB  *rdylst[MAXPRI+2];        /* ready-to-run queue - last         */
PCB *running;                  /* address of the running PCB        */
char *heapstart;               /* heap start address                */
char *heapend;                 /* heap end address                  */
CT conn_tab[EVHI+1];           /* external event connect table      */
short suspended;               /* reschedule flag                   */
```

- 28 -

0201065

*CLAIMS*

1. A method of communicating between processes in a data processing system (FIG. 7) comprising a plurality of processes, said method comprising the steps of:

(a) grouping related processes into one or more contexts, each context having associated therewith a table identifying the location of each of its constituent processes;

(b) generating a request by a first process in one of said contexts to send a message to each process within said one context having the identical name, the location and quantity of such other processes within said context being unknown to said first process;

(c) searching the table associated with said one context to determine whether any other process is located within said one context having said name;

(d) if said one context contains one or more other processes having the same name, sending said message to each of said other processes at the locations indicated by said table for said other processes.

2.    A  method  of  communicating between processes in   a  data processing system (FIG.  7) comprising a plurality of  processes,  said method comprising the steps of:

(a)   grouping related processes into one or more  contexts,  each context  having  associated therewith a context process  for  providing access to the processes within said context;

(b)   providing each context process with a table identifying the location of each of its constituent processes;

(c)   generating  a  request by a first process in  one  of  said contexts  to  send  a message to each process within said  one  context having  the  identical name,  the location and quantity of  such  other processes within said context being unknown to said first process;

(d)   searching the table of the context process associated  with said  one  context to determine whether any other  process  is  located within said one context having said name;

(e)  if said one context contains another process having the same name,  sending  said  message  to said other process  at  the  location indicated by said table for said other process.

3.    The  method of communicating between processes  recited  in claim 2, said method further comprising the steps of:

(f)  repeating steps (d) and (e) until said table indicates  that said one context does not contain another process having the same name, and  sending  said  message  to  said first  process  at  the  location indicated by said table for said first process.

0201065

4.   A data processing system comprising:

at least one processor  (24, FIG. 2),

a  plurality of processes resident in at least one  memory  store (26),  related  ones  of said processes being grouped into one or  more contexts (FIG. 7),  and

means  for  communicating  between  said  processes,  said  means comprising:

storage  means associated with each context for  identifying the location of each of its constituent processes;

means for generating a request by a first process in one  of said contexts to send a message to each process within said one context having  the  identical name,  the location and quantity of  such  other processes within said context being unknown to said first process;

means  for searching the storage means associated with  said one  context  and  indicating whether one or more other  processes  are located within said one context having said name; and

means  responsive to said indicating means for sending  said message  to each of said other processes at the locations indicated  by said storage means for said other processes.

5.    A data processing system comprising:

at least one processor (24, FIG.2),

a  plurality of processes resident in at least one  memory  store (26),   related  ones of said processes being grouped into one or  more contexts (FIG.7),   each context having associated therewith a  context process for providing access to the processes within said context, and

means  for  communicating  between  said  processes,  said  means comprising:

storage  means  associated  with each  context  process  for identifying the location of each of its constituent processes;

means for generating a request by a first process in one  of said contexts to send a message to each process within said one context having  the  identical name,  the location and quantity of  such  other processes within said context being unknown to said first process;

means for searching the storage means of the context process associated with said one context and indicating whether another of  the processes located within said one context has said name;

means  responsive to said indicating means for sending  said message to said other process at the location indicated by said storage means for said other process,

control means responsive to said searching means and to said sending  means  for  causing  them to repetitively  search  for  another process  located within said one context having the same name  and,  if so,   to  send said message to it,  until said message has been sent to all processes within said one context having the same name.

6.    The data processing system recited in claim 5, and further comprising:

means  responsive to said control means for sending said  message to  said first process at the location indicated by said storage  means for  said  first  process,  after said message has  been  sent  to  all processes within said one context having the same name.

7.    A  method  of  communicating between processes in   a  data processing  system  comprising a plurality of  processes,  said  method comprising the steps of:

grouping related processes into one or more contexts (FIG. 7), at least a  first of said contexts being contained within a second of said contexts,  and  each  context  having associated  therewith  a  context process for providing access to said context;

providing  each  context  process with a  table  identifying  the location of each of its constituent processes;

generating  a request by a first process in said first context to send a message to a second process, the location of said second process being unknown;

searching the table of said context process associated with  said first  context  to  determine whether said second  process  is  located within said first context;

if said second process is located within said first context, sending  said message to said second process at the location  indicated by said table for said second process;

if  said  second  process is not located within  said  first context,  searching  the table of said context process associated  with said second context to determine whether said second process is located within said second context;

if  said second process is located within  said  second context.  sending  said message to said second process at the  location indicated by said table for said second process;

if  said  second  process is not  located  within  said second context, indicating this information to said first process.

8. The method of communicating between processes recited in claim 7, said method further comprising the steps of:

providing at least three contexts (FIG. 7), at least said second of said contexts being contained within a third of said contexts,

if said second process is not contained within said first or second contexts, searching the table of said context process associated with said third context to determine whether said second process is located within said third context;

if said second process is located within said third context, sending said message to said second process at the location indicated by said table for said second process;

if said second process is not located within said third context, indicating this information to said first process.

9. A data processing system comprising:

at least one processor (24, FIG. 2),

a plurality of processes resident in at least one memory store (26), related ones of said processes being grouped into one or more contexts (FIG. 7), at least a first of said contexts being contained within a second of said contexts, and each context having associated therewith a context process for providing access to said context, and

means for communicating between said processes, said means comprising:

storage means associated with each context process for identifying the location of each of its constituent processes;

means for generating a request by a first process in said first context to send a message to a second process, the location of said second process being unknown;

first means for searching the storage means of said context process associated with said first context and indicating whether said second process is located within said first context;

means responsive to said first indicating means for sending said message to said second process at the location indicated by said storage means for said second process, if said second process is located within said first context;

second means responsive to said first indicating means for searching the storage means of said context process associated with said second context, if said second process is not located within said first context, and for indicating whether said second process is located within said second context;

means responsive to said second indicating means for sending said message to said second process at the location indicated by said storage means for said second process, if said second process is located within said second context; and

means responsive to said second indicating means for generating a notification message to said first process, if said second process is not located within said second context.

10.   The data processing system recited in claim 9, comprising at least three contexts, at least said second of said contexts being contained within a third of said contexts, and further comprising:

third means responsive to said second indicating means for searching the storage means of said context process associated with said third context, if said second process is not contained within said first or second contexts, and for indicating whether said second process is located within said third context;

means responsive to said third indicating means for sending said message to said second process at the location indicated by said storage means for said second process, if said second process is located within said third context;

said notification means being responsive to said third indicating means for generating a notification message to said first process, if said second process is not located within said third context.

11.  A method of handling interrupts in a data processing system comprising a processor (24, FIG. 2), a memory store (26), and at least one process resident in said memory store, said method comprising the steps of:

(a)  generating a interrupt message upon the occurrence of an event within said system (FIG. 5);

(b)  transmitting said message to said process; and

(c)  using said process to control all operations required to be performed to service said interrupt message.

12.  The method of handling interrupts recited in claim 11, wherein said event has occurred within said processor.

13.  The method of handling interrupts recited in claim 11, wherein said event has occurred within said memory store.

14.  A data processing system comprising:

a processor (24, FIG. 2);

a memory store (26), at least one process being resident in said memory store;

means for generating (101, FIG. 5) an interrupt message upon the occurrence of an event within said system; and

means responsive to said interrupt message (104) and to said process for controlling all operations required to be performed to service said interrupt message.

15.  The data processing system recited in claim 14, wherein said interrupt message is generated within said processor.

16.  The data processing system recited in claim 14, wherein said interrupt message is generated within said memory store.

1/5

0201065

**FIG. 1**

**FIG. 2**

**FIG. 3**

**FIG. 4**

*FIG.5*

*FIG.6*

**PCB** **PHT**

302

320{

300

A

301

321{

B

306

309

F

310

C'

311

G

303

C

304

322{

307

E

312

H

305

308

D D'

313

I

*FIG.7*

400

A

B

D 402

C

E

D'

C'

H I

F G

401 403

*FIG.8*

0201065

*FIG. 9*

EVENT — 300

DISABLE INTERRUPTS
SAVE PROCESSOR STATE — 302

304 — GET EVENT LEVEL

306 — ANY EESP CONNECTED TO THIS LEVEL ? — NO → ERROR — 308

YES

310 — SET INTERRUPT MASK OF EESP TO HARDWARE PRIORITY

312 — WAS ANY PROCESS EXECUTING ? — NO → 314 — SET 'INTERRUPTED_PID' IN NOTIFICATION MESSAGE TO 0

YES

316 — DELIVER NOTIFICATION MESSAGE TO EESP

318 — SCHEDULE EESP TO RUN

320 — SET 'INTERRUPTED_PID' IN NOTIFICATION MESSAGE TO PID OF INTERRUPTED PROCESS

322 — WAS THIS EESP EXECUTING ? — YES → DELIVER NOTIFICATION MESSAGE TO EESP — 324

324 → RESTORE PROCESSOR STATUS — 326

NO

328 — SAVE STATE OF INTERRUPTED PROCESS

330 — IS EESP IN GET STATE ?

NO → QUEUE NOTIFICATION MESSAGE TO EESP — 332

YES → DELIVER NOTIFICATION MESSAGE TO EESP — 334

336 — SCHEDULE EESP TO RUN